# EUROPEAN PATENT APPLICATION

(11) **EP 4 672 821 A1**
(43) Date of publication of application: **31.12.2025**
(21) Application number: 23923361.2
(22) Date of filing: 23.02.2023
(51) Int. Cl.: H04W 36/08

(54) **NEGOTIATION METHOD AND APPARATUS BASED ON FAST-TRANSITION ACCESS POINT, AND DEVICE AND MEDIUM**

(71) Applicant: GUANGDONG OPPO MOBILE TELECOMMUNICATIONS CORP., LTD., Dongguan, Guangdong 523860 (CN)
(72) Inventor: LUO, Chaoming, Dongguan, Guangdong 523860 (CN); LU, Liuming, Dongguan, Guangdong 523860 (CN); ZHOU, Pei, Dongguan, Guangdong 523860 (CN)
(74) Representative: Novagraaf Technologies
(86) International application number: PCT/CN2023/077990
(87) International publication number: WO 2024/174184

(57) **Abstract**

The present application belongs to the field of communications. Disclosed are a negotiation method and apparatus based on a fast-transition access point, and a device, a medium and a program product. The method is executed by a station, and comprises: by means of a fast basic service set transition protocol and/or a fast-transition resource request protocol, performing advanced negotiation with a target access point regarding first information, wherein the first information comprises at least one of a TWT, an R-TWT, and mapping from a flow identifier to a link. In the method, advanced negotiation regarding first information is performed with a target access point by means of a fast basic service set transition protocol and/or a fast-transition resource request protocol, such that advanced negotiation regarding at least one of a TWT, an R-TWT, and the mapping from a flow identifier to a link can be implemented, thereby resuming communication faster, which communication is interrupted due to transition.

## Description

### TECHNICAL FIELD

Embodiments of the present disclosure relates to the technical field of communications, and in particular, relate to a negotiation method and apparatus for fast access point transition, and a device, a medium, and a program product thereof.

### RELATED ART

In wireless communication systems, a station may transition from a serving access point thereof to a target access point.

However, in a case where the station transitions from the serving access point thereof to the target access point, the station may not pre-negotiate information with the target access point prior to being associated with the target access point. This results in a longer time being required to resume the communication interrupted by the transition.

### SUMMARY

Embodiments of the present disclosure provide a negotiation method and apparatus for fast access point transition, and a device, a medium, and a program product thereof. The technical solutions are as follows.

According to some embodiments of the present disclosure, a negotiation method for fast access point transition is provided. The method is performed by a station, and includes:
pre-negotiating first information with a target access point using at least one of Fast Basic Service Set Transition Protocol or Fast Transition Resource Request Protocol, wherein the first information includes at least one of a target wake time (TWT), a restricted TWT (R-TWT), or a traffic identifier (TID)-to-link mapping.

According to some embodiments of the present disclosure, a negotiation method for fast access point transition is provided. The method is performed by a target access point, and includes:
pre-negotiating first information with a station using at least one of Fast Basic Service Set Transition Protocol or Fast Transition Resource Request Protocol, wherein the first information includes at least one of a TWT, an R-TWT, or a TID-to-link mapping.

According to some embodiments of the present disclosure, a negotiation method for fast access point transition is provided. The method is performed by a current access point, and includes:
forwarding information of pre-negotiation for first information between a station and a target access point using at least one of Fast Basic Service Set Transition Protocol or Fast Transition Resource Request Protocol, wherein the first information includes at least one of a TWT, an R-TWT, or a TID-to-link mapping.

According to some embodiments of the present disclosure, a negotiation apparatus for fast access point transition is provided. The apparatus includes:
a first transmitting module, configured to pre-negotiate first information with a target access point using at least one of Fast Basic Service Set Transition Protocol or Fast Transition Resource Request Protocol, wherein the first information includes at least one of a TWT, an R-TWT, or a TID-to-link mapping.

According to some embodiments of the present disclosure, a negotiation apparatus for fast access point transition is provided. The apparatus includes:
a second transmitting module, configured to pre-negotiate first information with a station using at least one of Fast Basic Service Set Transition Protocol or Fast Transition Resource Request Protocol, wherein the first information includes at least one of a TWT, an R-TWT, or a TID-to-link mapping.

According to some embodiments of the present disclosure, a negotiation apparatus for fast access point transition is provided. The apparatus includes:
a third transmitting module, configured to forward information of pre-negotiation for first information between a station and a target access point using at least one of Fast Basic Service Set Transition Protocol or Fast Transition Resource Request Protocol, wherein the first information includes at least one of a TWT, an R-TWT, or a TID-to-link mapping.

According to an aspect of the embodiments of the present disclosure, a station device is provided. The station device includes: a processor, a transceiver connected to the processor, and a memory storing one or more executable instructions; wherein the processor is configured to load and execute the one or more executable instructions to cause the station device to perform the negotiation method for fast access point transition in the above embodiments.

According to an aspect of the embodiments of the present disclosure, an access point device is provided. The access point device includes: a processor, a transceiver connected to the processor, and a memory storing one or more executable instructions; wherein the processor is configured to load and execute the one or more executable instructions to cause the station device to perform the negotiation method for fast access point transition in the above embodiments.

According to some embodiments of the present disclosure, a computer-readable storage medium is provided. The computer-readable storage medium stores one or more computer programs, wherein the one or more runnable programs, when loaded and run by a processor, cause the processor to perform the negotiation method for fast access point transition in the above embodiments.

According to some embodiments of the present disclosure, a computer program product is provided. The computer program product includes one or more computer instructions, wherein the one or more computer instructions are stored in a computer-readable storage medium, and when read and executed by a processor, cause the processor to perform the negotiation method for fast access point transition in the above embodiments.

The technical solutions according to the embodiments of the present disclosure achieve the following technical effects.

Pre-negotiation of the first information is performed with the target access point using at least one of the Fast Basic Service Set Transition Protocol or the Fast Transition Resource Request Protocol. The first information includes at least one of the TWT, the R-TWT, or the TID-to-link mapping, such that pre-negotiation of at least one of the TWT, the R-TWT, or the TID-to-link mapping is performed, and the communication interrupted by transition is resumed fast.

### BRIEF DESCRIPTION OF DRAWINGS

For clearer descriptions of the technical solutions according to the embodiments of the present disclosure, the following briefly introduces the accompanying drawings required for describing the embodiments. Apparently, the accompanying drawings in the following description show merely some embodiments of the present disclosure, and persons of ordinary skill in the art may still derive other drawings from these accompanying drawings without creative efforts.
FIG. 1 is a schematic diagram of a communication system according to some embodiments of the present disclosure;
FIG. 2 is a flowchart of information interaction in an over-the-air mode in Fast Basic Service Set Transition Protocol in some practices;
FIG. 3 is a flowchart of information interaction in an over-the-distribution system (DS) mode in Fast Basic Service Set Transition Protocol in some practices;
FIG. 4 is a flowchart of information interaction in an over-the-air mode in Fast Basic Service Set Transition Protocol in some practices;
FIG. 5 is a schematic diagram of a format of a Resource Information Container (RIC)-Request element in some practices;
FIG. 6 is a schematic diagram of a format of an RIC-Request element in some practices;
FIG. 7 is a flowchart of information interaction in an over-the-air mode in Fast Basic Service Set Transition Resource Request Protocol in some practices;
FIG. 8 is a flowchart of information interaction in an over-the-DS mode in Fast Basic Service Set Transition Resource Request Protocol in some practices;
FIG. 9 is an operation diagram of an individual TWT in some practices;
FIG. 10 is an operation diagram of a broadcast TWT in some practices;
FIG. 11 is a schematic diagram of a structure of an Individual TWT element in some practices;
FIG. 12 is a schematic diagram of a structure of a Broadcast TWT element in some practices;
FIG. 13 is a schematic diagram of a structure of an R-TWT element in some practices;
FIG. 14 is a schematic diagram of a structure of a TID-to-Link Mapping element in some practices;
FIG. 15 is a flowchart of a negotiation method for fast access point transition according to some embodiments of the present disclosure;
FIG. 16 is a schematic diagram of a structure of a Broadcast TWT element according to some embodiments of the present disclosure;
FIG. 17 is a schematic diagram of a structure of a Broadcast TWT element according to some embodiments of the present disclosure;
FIG. 18 is a schematic diagram of a structure of an R-TWT element according to some embodiments of the present disclosure;
FIG. 19 is a schematic diagram of a structure of an R-TWT element according to some embodiments of the present disclosure;
FIG. 20 is a flowchart of a negotiation method for fast access point transition according to some embodiments of the present disclosure;
FIG. 21 is a flowchart of a negotiation method for fast access point transition according to some embodiments of the present disclosure;
FIG. 22 is a flowchart of a negotiation method for fast access point transition according to some embodiments of the present disclosure;
FIG. 23 is a flowchart of a negotiation method for fast access point transition according to some embodiments of the present disclosure;
FIG. 24 is a block diagram of a negotiation apparatus for fast access point transition according to some embodiments of the present disclosure;
FIG. 25 is a block diagram of a negotiation apparatus for fast access point transition according to some embodiments of the present disclosure;
FIG. 26 is a block diagram of a negotiation apparatus for fast access point transition according to some embodiments of the present disclosure; and
FIG. 27 is a schematic structural diagram of a station device or an access point device according to some embodiments of the present disclosure.

### DETAILED DESCRIPTION

For clearer descriptions of the objectives, technical solutions, and advantages of the present disclosure, embodiments of the present disclosure are further described in detail below with reference to the accompanying drawings.

The exemplary embodiments are described in detail herein, and examples are illustrated in the accompanying drawings. When the following description refers to the accompanying drawings, the same numbers in different accompanying drawings represent the same or similar elements unless otherwise indicated. The embodiments described in the following exemplary embodiments do not represent all embodiments consistent with the present disclosure. Rather, they are merely examples of apparatus and methods consistent with certain aspects of the present disclosure, as detailed in the appended claims.

The terms used in the present disclosure are for the purpose of describing particular embodiments only and are not intended to limit the present disclosure. As used in the present disclosure and the appended claims, the singular forms "a," "an," and "the" are intended to include the plural forms as well, unless the context clearly indicates otherwise. It should also be understood that the term "and/or" as used herein refers to and encompasses any or all possible combinations of one or more associated listed items.

It should be noted that user information (including but not limited to user equipment information, user personal information, and the like) and data (including but not limited to data for analysis, stored data, displayed data, and the like) in the present disclosure are information and data authorized by the users or fully authorized by the parties. The collection, use ,and processing of relevant data shall comply with the relevant laws, regulations, and standards of the relevant countries and regions.

It should be understood that although the terms "first," "second," and the like may be used herein to describe various pieces of information, and such information should not be limited to these terms. These terms are only used to distinguish one type of information from another. For example, a first parameter may also be referred to as a second parameter, and similarly, a second parameter is also referred to as a first parameter, without departing from the scope of the present disclosure. The word "if," as used herein, may be interpreted as "in a case where," " in a case when," or "in response to determining that," depending on the context.

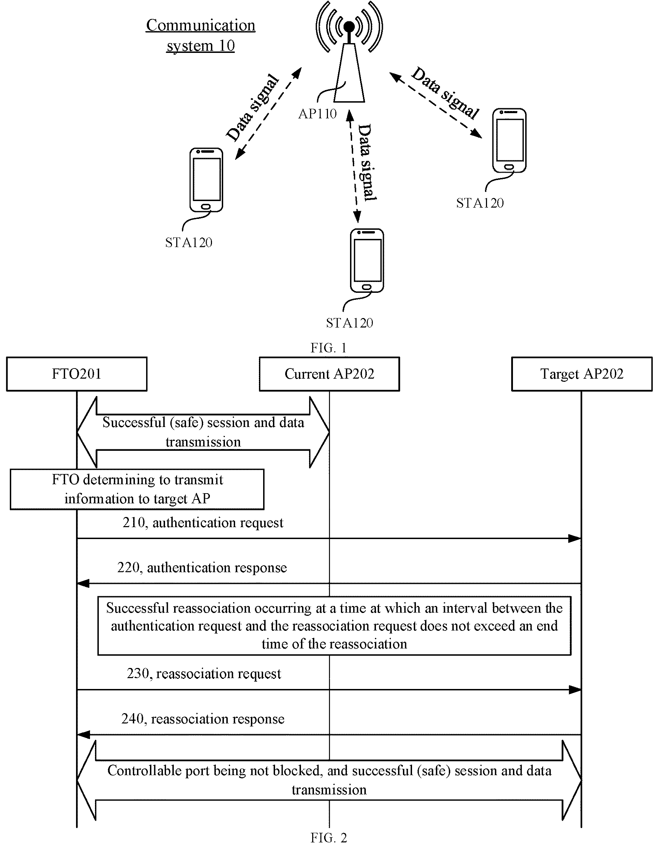

FIG. 1 is a schematic diagram of a communication system 10 according to some embodiments of the present disclosure. The communication system 10 includes terminal devices, or a terminal device and a network device, or an access point (AP) and a station (STA), which is not limited in the present disclosure. In the present disclosure, the communication system 10 is illustrated as including AP 110 and STA 120.

In some scenarios, the AP is also referred to as an AP STA, which means that, the AP is also a type of STA. In some scenarios, the STA is also referred to as a non-AP STA.

In some embodiments, STAs include an AP STA and a non-AP STA.

The communications within the communication system involve communications between an AP and a non-AP STA, communications between non-AP STAs, or communications between an STA and a peer STA. The peer STA refers to a device in a peer communication with an STA. For example, the peer STA may be an AP or a non-AP STA.

The AP functions as a bridge connecting the wired network and the wireless network, and mainly functions to connect various wireless network clients and then access the wireless network to the Ethernet. AP devices may be terminal devices (such as mobile phones) or network devices (such as routers) equipped with wireless-fidelity (Wi-Fi) chips.

It should be understood that the role of the STA in the communication system is not absolute. For example, in some scenarios, in a case where a mobile phone is connected to a router, the mobile phone is a non-AP STA. However, in a case where the mobile phone serves as a hotspot for other mobile phones, the mobile phone is an AP.

Both the AP and the non-AP STA may be devices applied in the Internet of Vehicles, Internet of Things (IoT) nodes and sensors in the IoT, smart cameras, smart remotes, smart water meters, and electricity meters in smart homes, and sensors in smart cities.

In some embodiments, the non-AP STA supports, but is not limited to, the 802.11be standard. The non-AP STA may also support various current and future WLAN standards of the 802.11 family, such as 802.11ax, 802.11ac, 802.11n, 802.11g, 802.11b, and 802.11a.

In some embodiments, the AP is a device that supports the 802.11be standard. The AP may also be a device that supports various current and future WLAN standards of the 802.11 family, such as 802.1 lax, 802.11ac, 802.11n, 802.11g, 802.11b, and 802.11a.

In the embodiments of the present disclosure, the STA may be devices that support the WLAN/Wi-Fi technology, such as mobile phones, tablets, computers, virtual reality (VR) devices, augmented reality (AR) devices, industrial control wireless devices, set-top boxes, self-driving wireless devices, in-vehicle communication devices, wireless devices in remote medical applications, wireless devices in smart grids, wireless devices in transportation safety, wireless devices in smart cities, wireless devices in smart homes, and wireless communication chip.

Bands supported by the WLAN technology include but are not limited to low-bands (2.4 GHz, 5 GHz, and 6 GHz) and a high-band (45 GHz, 60 GHz).

One or more links are present between the STA and the AP. In some embodiments, the STA and the AP support multi-band communications, such as simultaneous communications at 2.4 GHz, 5 GHz, 6 GHz, 45 GHz, and 60 GHz bands, or simultaneous communications in different channels of the same band (or different bands), such that the communication throughput and/or reliability between devices are improved. Such devices are often referred to as multi-band devices, or multi-link devices (MLDs), and are also referred to as multi-link entities or multi-band entities. The MLD may be an AP device or an STA device. In a case where the MLD is an AP device, one or more APs are included in the MLD; and in a case where the MLD is an STA, one or more non-AP STAs are included in the MLD.

The MLD including one or more APs is also referred to as an AP, and the MLD including one or more non-AP STAs is also referred to as a non-AP. In the embodiments of the present disclosure, the non-AP is also referred to as an STA.

In the embodiments of the present disclosure, the AP may include a plurality of APs, the non-AP may include a plurality of STAs, a plurality of links may be formed between the APs in the AP and the STAs in the non-AP, and data communication may be performed between the APs in the AP and the corresponding STAs in the non-AP over the corresponding links.

The AP is a device deployed in a wireless local area network to provide a wireless communication function for the STA. The station may include a user equipment (UE), an access terminal, a subscriber unit, a subscriber station, a rover station, a mobile station, a remote station, a remote terminal, a mobile device, a wireless communication device, a user agent, or a user apparatus. In some embodiments, the station is a cellular phone, a cordless phone, a Session Initiation Protocol (SIP) phone, a wireless local loop (WLL) station, a personal digital assistant (PDA), a handheld device with a wireless communication function, a computing device or another processing device connected to a wireless modem, a vehicle-mounted device, or a wearable device, which is not limited in the embodiments of the present disclosure.

In the embodiments of the present disclosure, both the station and the access point support the institute of electrical and electronics engineers (IEEE) 802.11 standard, but not limited to the IEEE 802.11 standard.

Related technologies in the embodiments of the present disclosure are described.

### 1 Fast Basic Service Set Transition Protocol

A fast basic service set transition function is to reduce a time consumed for connection between the station and the DS connected to a backend of the access point in a case where the station transitions an accessed basic service set. Two protocols used in the function are defined in the relevant standards, that is, Fast Basic Service Set (BSS) Transition Protocol and Fast Transition Resource Request Protocol.

In the function, a station that originates fast transition (FT) is referred to as an FT originator (FTO), and a device that responds to the FTO is referred to as an FT responder (FTR).

In a case where the FTO does not make a resource request prior to transitioning the BSS or makes a resource request in a reassociation process, the Fast Basic Service Set Transition Protocol is used. In a case where the FTO needs to make a resource request prior to transitioning the BSS, the Fast Transition Resource Request Protocol is used.

Information interaction in transition of the BSS by the FTO is in two mode, that is, an over-the-air mode (that is, authentication information is interacted over the air between the FTO and the target access point) and an over-the-DS mode (that is, authentication information is interacted over the air between the FTO and the target access point through the associated current access point via the distribution system, and the information between the associated current access point and the target access point are packaged in a format defined by the relevant standards.

For a non-MLD station, also referred to as a high efficiency (HE) station or a legacy station, FIG. 2 illustrates a flowchart of information interaction in an over-the-air mode in Fast Basic Service Set Transition Protocol in some practices. The procedure includes the following processes.

**In S210,** FTO 201 transmits an Authentication-Request frame to target AP 203.

S210 is performed in a case where FTO 201 needs to transmit data information to target AP 203.

The Authentication-Request frame is an authentication frame with a value of an Authentication Transaction Sequence Number field being 1.

**In S220,** target AP 203 transmits an Authentication-Response frame to FTO 201.

In response to receiving the Authentication-Request frame from FTO 201, target AP 203 feeds back the Authentication-Response frame. The Authentication-Response frame is an authentication frame with a value of an Authentication Transaction Sequence Number field being 2.

**In S230,** FTO 201 transmits a Reassociation-Request frame to target AP 203.

In a case where an interval between the authentication request and the reassociation request does not exceed an end time of the reassociation, the reassociation succeeds.

**In S240,** target AP 203 transmits a Reassociation-Response frame to FTO 201.

In response to receiving the Reassociation-Request frame from FTO 201, target AP 203 feeds back the Reassociation-Response frame.

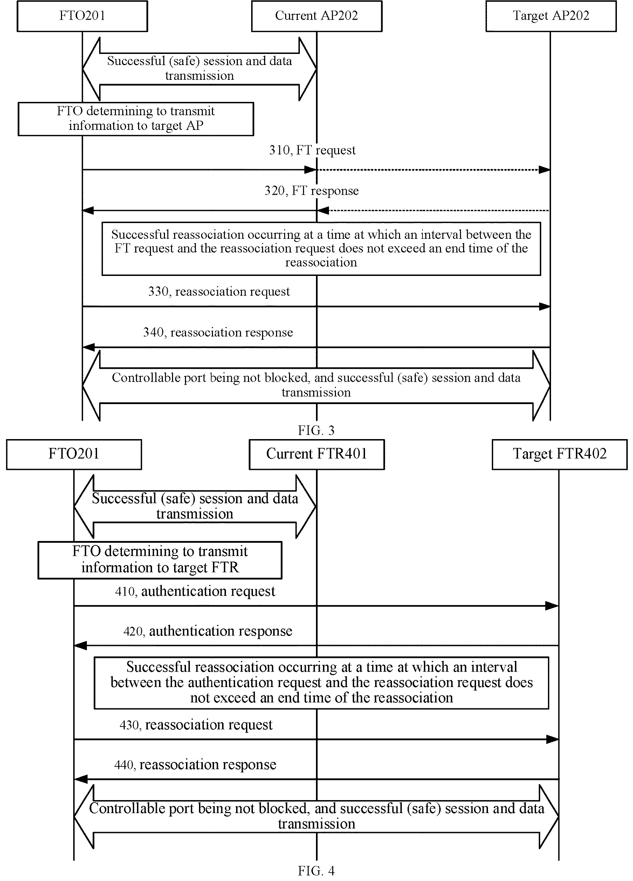

FIG. 3 illustrates a flowchart of information interaction in an over-the-DS mode in Fast Basic Service Set Transition Protocol in some practices.

**In S310,** FTO 201 transmits an FT-Request frame to target AP 203.

S310 is performed in a case where FTO 201 needs to transmit data information to target AP 203. FTO 201 transmits the FT-Request frame to current AP 202, and current AP 202 forwards information carried in the FT-Request frame to target AP 203.

**In S320,** target AP 203 transmits an FT-Response frame to FTO 201.

In response to receiving information carried in the FT-Request frame from FTO 201, target AP 203 transmits information for generating the FT-Response frame to current AP 202, and current AP 202 generates the FT-Response frame and transmits the FT-Response frame to FTO 201.

**In S330,** FTO 201 transmits a Reassociation-Request frame to target AP 203.

In a case where an interval between the authentication request and the reassociation request does not exceed an end time of the reassociation, the reassociation succeeds.

**In S340,** target AP 203 transmits a Reassociation-Response frame to FTO 201.

In response to receiving the Reassociation-Request frame from FTO 201, target AP 203 feeds back the Reassociation-Response frame.

For an MLD station, also referred to as an extremely high throughput (EHT) station, FIG. 4 illustrates a flowchart of information interaction in an over-the-air mode in Fast Basic Service Set Transition Protocol in some practices (the over-the-DS mode involves FTR 401, and the procedure of the over-the-DS mode is not defined). In the procedure, multi-link information is added in relevant frames, for example, a Basic Multi-Link element.

**In S410,** FTO 201 transmits an Authentication-Request frame to target FTR 402.

S210 is performed in a case where FTO 201 needs to transmit data information to target FTR 402.

The Authentication-Request frame is an authentication frame with a value of an Authentication Transaction Sequence Number field being 1.

**In S420,** target FTR 402 transmits an Authentication-Response frame to FTO 201.

In response to receiving the Authentication-Request frame from FTO 201, target FTR 402 feeds back the Authentication-Response frame. The Authentication-Response frame is an authentication frame with a value of an Authentication Transaction Sequence Number field being 2.

**In S430,** FTO 201 transmits a Reassociation-Request frame to target FTR 402.

In a case where an interval between the authentication request and the reassociation request does not exceed an end time of the reassociation, the reassociation succeeds.

**In S440,** target FTR 402 transmits a Reassociation-Response frame to FTO 201.

In response to receiving the Reassociation-Request frame from FTO 201, target FTR 402 feeds back the Reassociation-Response frame.

The RIC is a set of elements for representing a resource request or a resource response. The RIC for the resource request is referred to as an RIC-request, and the RIC for the resource response is referred to as an RIC-response.

An RIC-request includes one or more resource request fields. Each resource request field includes an RIC Data element (RDE) and at least one Resource Descriptor field. Each Resource Descriptor field includes one or more elements, and details are defined in relevant standards.

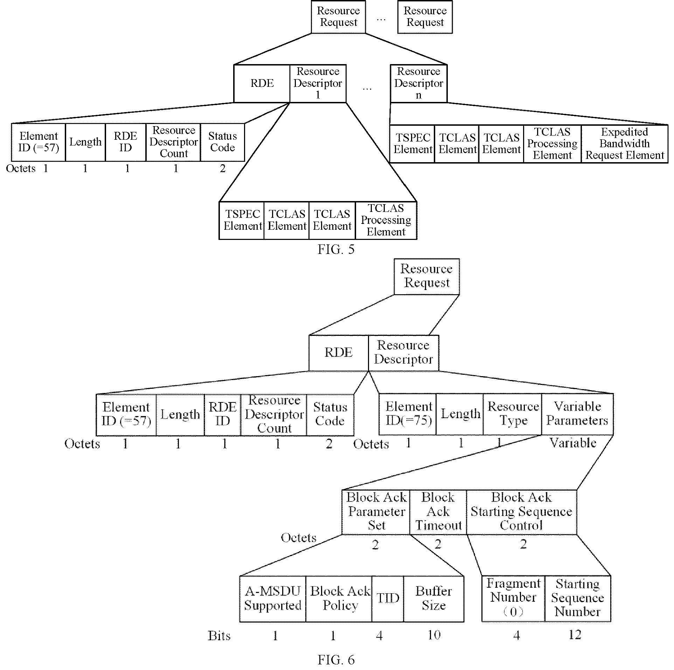

FIG. 5 is a schematic diagram of a format of an RIC-Request element in some practices. The Resource Descriptor field includes parameters associated with traffic characteristics (the parameters are packaged in defined elements). The RIC-request includes a plurality of resource request fields, and each resource request field includes an RDE and Resource Descriptor field 1 to Resource Descriptor field n, that is, n Resource Descriptor fields. n is a positive integer.

The RDE includes at least one of: an Element Identifier (ID) field, a Length field, an RDE Identifier field, a Resource Descriptor Count field, or a Status Code field.

The Element ID field occupies 1 octet and takes a value of 57, the Length field occupies 1 octet, the RDE Identifier field occupies 1 octet, the Resource Descriptor Count field occupies 1 octet, and the Status Code field occupies 2 octets.

The Resource Descriptor field 1 includes at least one of a Traffic Specification (TSPEC) element, a Traffic Classification (TCLAS) element, a TCLAS element, or a TCLAS Processing element.

The Resource Descriptor field n includes at least one of a TSPEC element, a TCLAS element, a TCLAS element, a TCLAS Processing element, or an Expedited Bandwidth Request element.

Two TCLAS elements in the Resource Descriptor field are of the same type, but fields in the two TCLAS elements take different values.

The above format of the RIC-Request element is an exemplary case. In different embodiments or in different designs, at least one of positions of the RDE and the Resource Descriptor fields in the frame, and sequences, octets, and bits of the RDE and the Resource Descriptor fields and other fields may change, which is not limited in the present disclosure.

FIG. 6 is a schematic diagram of a format of an RIC-Request element in some practices. The RIC-Request element is a block ack parameters RIC-Request element. The Resource Descriptor field includes parameters associated with block ack. The parameters are not defined in elements, and thus are packaged in an RIC Descriptor element. The RIC-request includes a resource request field, and the resource request field includes an RDE and a Resource Descriptor field.

The RDE includes at least one of: an Element Identifier (ID) field, a Length field, an RDE Identifier field, a Resource Descriptor Count field, or a Status Code field.

The Element ID field occupies 1 octet and takes a value of 57, the Length field occupies 1 octet, the RDE Identifier field occupies 1 octet, the Resource Descriptor Count field occupies 1 octet, and the Status Code field occupies 2 octets.

The Resource Descriptor field includes at least one of an Element ID field, a Length field, a Resource Type field, or a Variable Parameters field.

The Element ID field occupies 1 octet and takes a value of 75, the Length field occupies 1 octet, the Resource Type field occupies 1 octet, and the octet of the Variable Parameters field is variable.

The Variable Parameters field includes at least one of a Block Ack Parameter Set field, a Block Ack Timeout field, or a Block Ack Starting Sequence Control field.

The Block Ack Parameter Set field occupies 2 octets, the Block Ack Timeout field occupies 2 octets, and the Block Ack Starting Sequence Control field occupies 2 octets.

The Block Ack Parameter Set field includes at least one of an Aggregate Media Access Control Service Data Unit (A-MSDU) Supported field, a Block Ack Policy field, a TID field, or a Buffer Size field.

The A-MSDU Supported field occupies 1 octet, the Block Ack Policy field occupies 1 octet, the TID field occupies 1 octet, and the Buffer Size field occupies 10 octets.

The Block Ack Starting Sequence Control field includes at least one of a Fragment Number field or a Starting Sequence Number field.

The Fragment Number field occupies 4 octets with a serial number of 0, and the Starting Sequence Number field occupies 12 octets.

The above format of the RIC-Request element is an exemplary case. In different embodiments or in different designs, at least one of positions of the RDE, the Resource Descriptor fields, the Variable Parameters field, the Block Ack Parameter Set field, and the Block Ack Starting Sequence Control field in the frame, and sequences, octets, and bits of the RDE, the Resource Descriptor fields, the Variable Parameters field, the Block Ack Parameter Set field, and the Block Ack Starting Sequence Control field and other fields may change, which is not limited in the present disclosure.

Similarly, an RIC-response includes one or more resource response fields, and each resource response field includes an RDE and at least one Resource Descriptor field. Each Resource Descriptor field includes one or more elements, and details are defined in relevant standards, which are not described any further herein.

### 2 Fast Basic Service Set Transition Resource Request Protocol

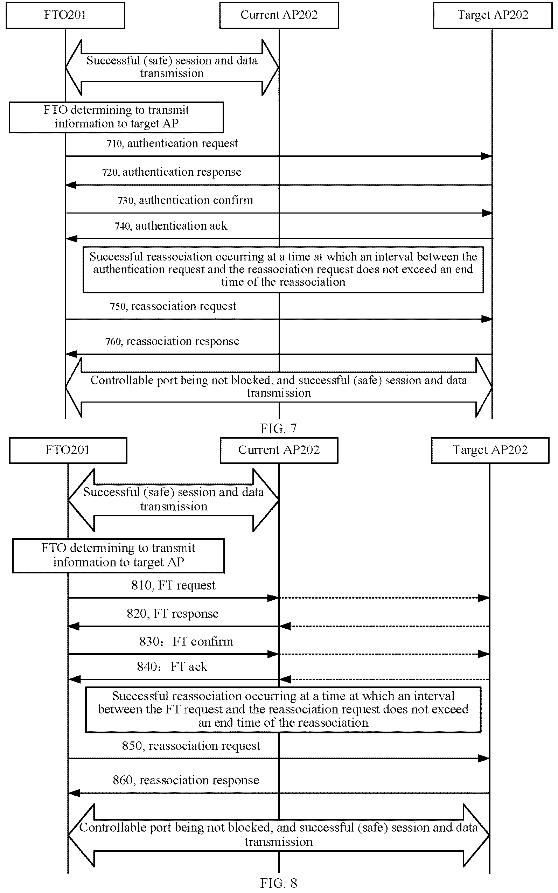

For a non-MLD station, also referred to as an HE station or a legacy station, FIG. 7 illustrates a flowchart of information interaction in an over-the-air mode in a Fast Basic Service Set Transition Resource Request Protocol in some practices. The procedure includes the following processes.

**In S710,** FTO 201 transmits an Authentication-Request frame to target AP 203.

S710 is performed in a case where FTO 201 needs to transmit data information to target AP 203.

The Authentication-Request frame is an authentication frame with a value of an Authentication Transaction Sequence Number field being 1.

**In S720,** target AP 203 transmits an Authentication-Response frame to FTO 201.

In response to receiving the Authentication-Request frame from FTO 201, target AP 203 feeds back the Authentication-Response frame. The Authentication-Response frame is an authentication frame with a value of an Authentication Transaction Sequence Number field being 2.

**In S730,** FTO201 transmits an Authentication-Confirm frame to target AP 203.

The Authentication-Confirm frame is an authentication frame with a value of an Authentication Transaction Sequence Number field being 3.

**In S740,** target AP 203 transmits an Authentication-Ack frame to FTO 201.

In response to receiving the Authentication-Confirm frame from FTO 201, target AP 203 feeds back the Authentication-Ack frame. The Authentication-Ack frame is an authentication frame with a value of an Authentication Transaction Sequence Number field being 4.

**In S750,** FTO 201 transmits a Reassociation-Request frame to target AP 203.

In a case where an interval between the authentication request and the reassociation request does not exceed an end time of the reassociation, the reassociation succeeds.

**In S760,** target AP 203 transmits a Reassociation-Response frame to FTO 201.

In response to receiving the Reassociation-Request frame from FTO 201, target AP 203 feeds back the Reassociation-Response frame.

FIG. 8 illustrates a flowchart of information interaction in an over-the-DS mode in a Fast Basic Service Set Transition Resource Request Protocol in some practices.

**In S810,** FTO 201 transmits an FT-Request frame to target AP 203.

S810 is performed in a case where FTO 201 needs to transmit data information to target AP 203. FTO 201 transmits the FT-Request frame to current AP 202, and current AP 202 forwards information carried in the FT-Request frame to target AP 203.

**In S820,** target AP 203 transmits an FT-Response frame to FTO 201.

In response to receiving information carried in the FT-Request frame, target AP 203 transmits information for generating the FT-Response frame to current AP 202, and current AP 202 generates the FT-Response frame and transmits the FT-Response frame to FTO 201.

**In S830,** FTO 201 transmits an FT-Confirm frame to target AP 203.

FTO 201 transmits the FT-Confirm frame to current AP 202, and current AP 202 forwards information carried in the FT-Confirm frame to target AP 203.

**In S840,** target AP 203 transmits an FT-Ack frame to FTO 201.

In response to receiving information carried in the FT-Ack frame, target AP 203 transmits information for generating the FT-Ack frame to current AP 202, and current AP 202 generates the FT-Ack frame and transmits the FT-Response frame to FTO 201.

**In S850,** FTO 201 transmits a Reassociation-Request frame to target AP 203.

In a case where an interval between the authentication request and the reassociation request does not exceed an end time of the reassociation, the reassociation succeeds.

**In S860,** target AP 203 transmits a Reassociation-Response frame to FTO 201.

In response to receiving the Reassociation-Request frame from FTO 201, target AP 203 feeds back the Reassociation-Response frame.

For an MLD station, also referred to as an EHT station, the over-the-air mode and the over-the-DS mode in the Fast Basic Service Set Transition Resource Request Protocol are not defined, and reference may be made to related description in the Fast Basic Service Set Transition Protocol in in the MLD station. In the procedure, multi-link information is added, for example, a Basic Multi-Link element.

### 3. TWT

The TWT is mainly used to reduce channel contention and a time that a station with a power-saving function keeps in a wakeup state by scheduling the station to different time transmissions. The TWT may be an individual TWT for a single station or a broadcast TWT for a plurality of stations.

A station that requests to negotiate the TWT is referred to as a TWT requesting STA, and a station that responds to the TWT negotiation request is referred to as a TWT responding STA. The TWT requesting STA is configured to wake up at a period and performs frame exchange with the TWT responding STA. In the TWT negotiation, the TWT requesting STA transmits own wakeup plan information to the TWT responding STA. The TWT responding STA generates a corresponding scheduling plan and feeds back corresponding TWT information to the TWT requesting STA (also referred to as a solicited TWT response). An HE AP with a TWT scheduling function may also actively transmit the TWT scheduling information to the station to set up the TWT (also referred to as an unsolicited TWT response).

In a case where an explicit TWT is used, the TWT requesting STA wakes up using a mode defined in the relevant standards, performs frame exchange, and receives information of a next wakeup time carried in the response frame by the TWT responding STA.

In a case where an implicit TWT is used, the TWT requesting STA calculates information of a next wakeup time by adding a fixed value to the current wakeup time using a mode defined in the relevant standards.

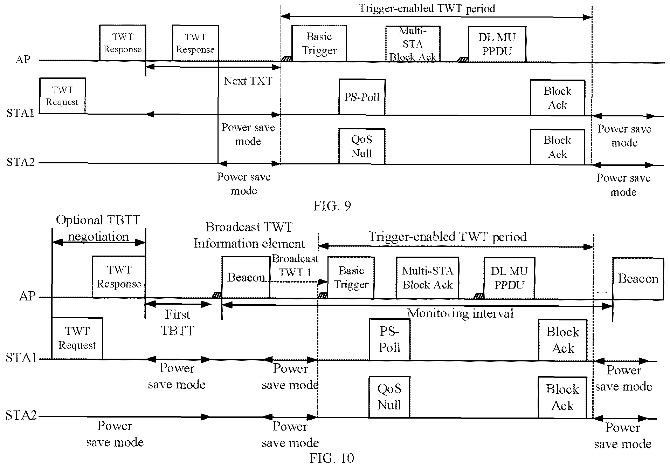

FIG. 9 is an operation diagram of an individual TWT in some practices. STA 1 transmits a TWT request to an AP, and the AP feeds back a TWT response to set up a trigger-enabled TWT. The TWT responding STA (for example, the AP) should transmit a trigger frame in each TWT service period (TWT SP) to trigger the TWT requesting STA (for example, STA 1) scheduled based on the TWT. The trigger frame is replaceable by a frame in a downlink multi user physical layer protocol data unit (DL MU PPDU) on the premise that sufficient uplink resources are allocated to the station in the frame to report a buffer status reporting (BSR). Upon receiving the trigger frame, the TWT requesting STA transmits a power save pool (PS-Poll) frame or a frame indicating an automatic power shutdown (APSD) trigger function for response, for example, a quality of service (QoS) null frame carrying an APSD indication or a QoS data frame.

The AP further transmits an unsolicited TWT response to STA 2 to set up the trigger-enabled TWT. In the TWT SP, the AP transmits a basic trigger frame to STA 1 and STA 2, STA 1 transmits the PS-Poll frame to indicate that STA1 is in the wakeup state, and STA 2 transmits the QoS Null frame to indicate that STA 2 is in the wakeup state. STA1 and STA2 continue to receive the DL MU PPDU from the AP subsequently.

FIG. 10 is an operation diagram of a broadcast TWT in some practices. In some embodiments, in a case where the station plans to operate in a power save mode, the station negotiates an interval between a transmission time of a first Beacon frame to be received in wakeup and a time of receiving a Beacon frame in following wakeup by transmitting the TWT request. The AP carries a Broadcast TWT element in the Beacon frame to indicate a broadcast TWT SP. STA 1 and STA 2 acquire the broadcast TWT information by receiving the Beacon frame.

Each broadcast TWT is uniquely identified by a <broadcast TWT ID, medium access control (MAC) address> tuple. The broadcast TWT ID is a field of a Broadcast TWT ID subfield in the TWT element in the Beacon frame, and the MAC address is an address of a TWT scheduling AP.

According to the relevant standards, the negotiation process of joining or exiting a broadcast TWT is achieved by interaction of frames carrying one or more TWT elements. For example, in a case where the STA transmits a TWT request, the AP responds with a TWT response; or, the AP transmits an unsolicited TWT response; or, the AP transmits an unsolicited TWT response, and the STA transmits a TWT removal or TWT response.

According to the relevant standards, the STA and the AP suspend or resume the setup individual TWTS and/or broadcast TWT, and/or set up a flexible TWT using a TWT Information frame carrying the TWT elements.

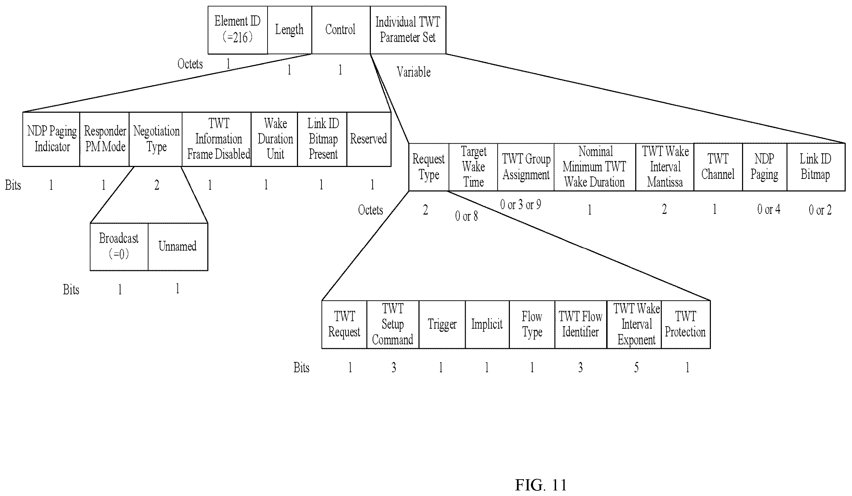

FIG. 11 is a schematic diagram of a structure of an Individual TWT element in some practices. A Broadcast field in a Control field in a TWT element (an Element ID field takes a value of 216) is an Individual TWT element when the Broadcast field takes a value of 0 (that is, a Negotiation Type Field takes a value of 0). An Individual TWT element includes an Individual TWT Parameter Set field to indicate scheduling information of the individual TWT.

The Individual TWT element includes at least one of an Element ID field, a Length field, a Control field, or an Individual TWT Parameter Set field.

The Element ID field occupies 1 octet and takes a value of 216, the Length field occupies 1 octet, the Control field occupies 1 octet, and the octet of the Individual TWT Parameter Set field is variable.

The Control field includes at least one of a Null Data Packet (NDP) Paging Indicator field, a Responder Power Management (PM) Mode field, a Negotiation Type field, a TWT Information Frame Disabled field, a Wake Duration Unit field, a Link ID Bitmap Present field, or a Reserved field.

The NDP Paging Indicator field occupies 1 octet, the Responder PM Mode field occupies 1 octet, the Negotiation Type field occupies 2 octets, the TWT Information Frame Disabled field occupies 1 octet, the Wake Duration Unit field occupies 1 octet, the Link ID Bitmap Present field occupies 1 octet, and the Reserved field occupies 1 octet.

The Negotiation Type field includes at least one of a Broadcast field or a Unnamed field.

The Broadcast field occupies 1 octet and takes a value of 0, and the Unnamed field occupies 1 octet.

The Individual TWT Parameter Set field includes at least one of a Request Type field, a Target Wake Time field, a TWT Group Assignment field, a Nominal Minimum TWT Wake Duration field, a TWT Wake Interval Mantissa field, a TWT Channel field, a NDP Paging field, or a Link ID Bitmap field.

The Request Type field occupies 2 octets, the Target Wake Time field occupies 0 or 8 octets, the TWT Group Assignment field occupies 0, 3, or 9 octets, the Nominal Minimum TWT Wake Duration field occupies 1 octet, the TWT Wake Interval Mantissa field occupies 2 octets, the TWT Channel field occupies 1 octet, the NDP Paging field occupies 0 or 4 octets, and the Link ID Bitmap field occupies 0 or 2 octets.

The Request Type field includes at least one of a TWT Request field, a TWT Setup Command field, a Trigger field, an Implicit field, a Flow Type field, a TWT Flow Identifier field, a TWT Wake Interval Exponent field, or a TWT Protection field.

The TWT Request field occupies 1 octet, the TWT Setup Command field occupies 3 octets, the Trigger field occupies 1 octet, the Implicit field occupies 1 octet, the Flow Type field occupies 1 octet, the TWT Flow Identifier field occupies 3 octets, the TWT Wake Interval Exponent field occupies 5 octets, and the TWT Protection field occupies 1 octet.

The above format of the Individual TWT element is an exemplary case. In different embodiments or in different designs, at least one of positions of the Individual TWT element, the Control field, the Negotiation Type field, the Individual TWT Parameter Set field, and the Request Type field in the frame, and sequences, octets, and bits of the Individual TWT element, the Control field, the Negotiation Type field, the Individual TWT Parameter Set field, and the Request Type field and other fields may change, which is not limited in the present disclosure.

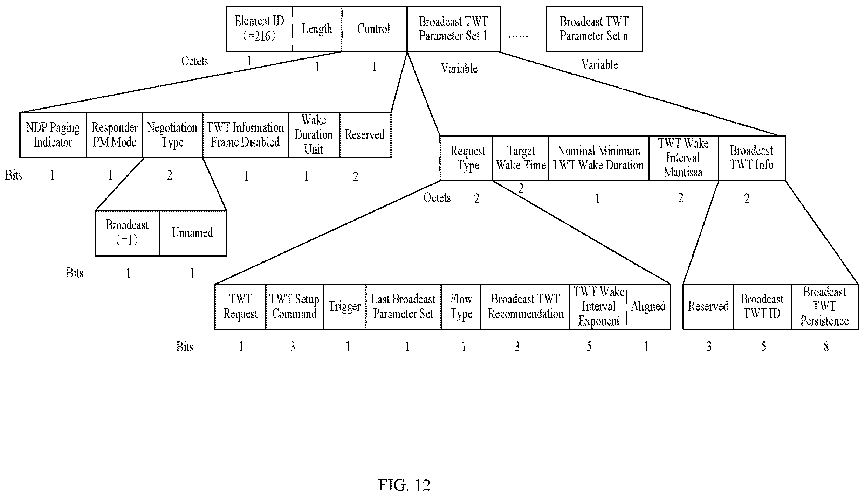

FIG. 12 is a schematic diagram of a structure of a Broadcast TWT element in some practices. A Broadcast field in a Control field in a TWT element (an Element ID field takes a value of 216) is a Broadcast TWT element when the Broadcast field takes a value of 1 (that is, a Negotiation Type Field takes a value of 2 or 3). A Broadcast TWT element includes one or more Broadcast TWT Parameter Set fields. Each Broadcast TWT Parameter Set field indicates scheduling information of a broadcast TWT. A number of Broadcast TWT Parameter Set fields is determined based on a value of a last Broadcast Parameter Set field in the Request Type field. That is, a last Broadcast Parameter Set field in the Request Type field of the last Broadcast TWT Parameter Set field takes a value of 1, and all previous take a value of 0.

The Broadcast TWT element includes at least one of an Element ID field, a Length field, a Control field, or a Broadcast TWT Parameter Set field 1 to a Broadcast TWT Parameter Set field n. n is a positive integer.

The Element ID field occupies 1 octet and takes a value of 216, the Length field occupies 1 octet, the Control field occupies 1 octet, and octets of all Broadcast TWT Parameter Set fields are variable.

The Control field includes at least one of an NDP Paging Indicator field, a Responder PM Mode field, a Negotiation Type field, a TWT Information Frame Disabled field, a Wake Duration Unit field, or a Reserved field.

The NDP Paging Indicator field occupies 1 octet, the Responder PM Mode field occupies 1 octet, the Negotiation Type field occupies 2 octets, the TWT Information Frame Disabled field occupies 1 octet, the Wake Duration Unit field occupies 1 octet, and the Reserved field occupies 2 octets.

The Negotiation Type field includes at least one of a Broadcast field or a Unnamed field.

The Broadcast field occupies 1 octet and takes a value of 1, and the Unnamed field occupies 1 octet.

The Broadcast TWT Parameter Set field 1 includes at least one of a Request Type field, a Target Wake Time field, a Nominal Minimum TWT Wake Duration field, a TWT Wake Interval Mantissa field, or a Broadcast TWT Info field.

The Request Type field occupies 2 octets, the Target Wake Time field occupies 2 octets, the Nominal Minimum TWT Wake Duration field occupies 1 octet, the TWT Wake Interval Mantissa field occupies 2 octets, and the Broadcast TWT Info field occupies 2 octets.

The Request Type field includes at least one of a TWT Request field, a TWT Setup Command field, a Trigger field, a Last Broadcast Parameter Set field, a Flow Type field, a Broadcast TWT Recommendation field, a TWT Wake Interval Exponent field, or an Aligned field.

The TWT Request field occupies 1 octet, the TWT Setup Command field occupies 3 octets, the Trigger field occupies 1 octet, the Last Broadcast Parameter Set field occupies 1 octet, the Flow Type field occupies 1 octet, the Broadcast TWT Recommendation field occupies 3 octets, the TWT Wake Interval Exponent field occupies 5 octets, and the Aligned field occupies 1 octet.

The Broadcast TWT Info field includes at least one of a Reserved field, a Broadcast TWT ID field, or a Broadcast TWT Persistence field.

The Reserved field occupies 3 octets, the Broadcast TWT ID field occupies 5 octets, and the Broadcast TWT Persistence field occupies 8 octets.

The above format of the Broadcast TWT element is an exemplary case. In different embodiments or in different designs, at least one of positions of the Broadcast TWT element, the Control field, the Negotiation Type field, the Broadcast TWT Parameter Set field, the Request Type field, and the Broadcast TWT Info field in the frame, and sequences, octets, and bits of the Broadcast TWT element, the Control field, the Negotiation Type field, the Broadcast TWT Parameter Set field, the Request Type field, and the Broadcast TWT Info field and other fields may change, which is not limited in the present disclosure.

### 4.R-TWT

According to the relevant standards, the R-TWT operation provides an enhanced medium access protection and resource reservation mechanism for latency-sensitive services in transmission of the EHT station. A non-access point EHT station becomes a member of one or more R-TWT scheduling using the methods stipulated in relevant standards. The procedure is similar to the negotiation process of joining or exiting the broadcast TWT. The difference is that the frame carries the R-TWT element, that is, the TWT element includes a Restricted TWT Traffic Info field to indicate that the TWT is the R-TWT.

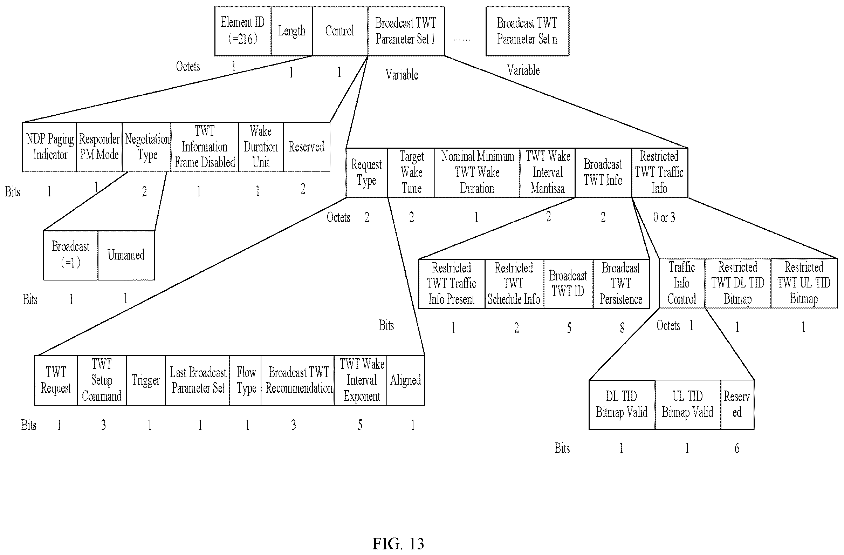

FIG. 13 is a schematic diagram of a structure of an R-TWT element in some practices. The R-TWT element includes at least one of an Element ID field, a Length field, a Control field, or a Broadcast TWT Parameter Set field 1 to a Broadcast TWT Parameter Set field n. n is a positive integer.

The Element ID field occupies 1 octet and takes a value of 216, the Length field occupies 1 octet, the Control field occupies 1 octet, and octets of all Broadcast TWT Parameter Set fields are variable.

The Control field includes at least one of an NDP Paging Indicator field, a Responder PM Mode field, a Negotiation Type field, a TWT Information Frame Disabled field, a Wake Duration Unit field, or a Reserved field.

The NDP Paging Indicator field occupies 1 octet, the Responder PM Mode field occupies 1 octet, the Negotiation Type field occupies 2 octets, the TWT Information Frame Disabled field occupies 1 octet, the Wake Duration Unit field occupies 1 octet, and the Reserved field occupies 2 octets.

The Negotiation Type field includes at least one of a Broadcast field or an Unnamed field.

The Broadcast field occupies 1 octet and takes a value of 1, and the Unnamed field occupies 1 octet.

The Broadcast TWT Parameter Set field 1 includes at least one of a Request Type field, a Target Wake Time field, a Nominal Minimum TWT Wake Duration field, a TWT Wake Interval Mantissa field, a Broadcast TWT Info field, or a Restricted TWT Traffic Info field.

The Request Type field occupies 2 octets, the Target Wake Time field occupies 2 octets, the Nominal Minimum TWT Wake Duration field occupies 1 octet, the TWT Wake Interval Mantissa field occupies 2 octets, the Broadcast TWT Info field occupies 2 octets, and the R-TWT Traffic Info field occupies 0 or 3 octets.

The Request Type field includes at least one of a TWT Request field, a TWT Setup Command field, a Trigger field, a Last Broadcast Parameter Set field, a Flow Type field, a Broadcast TWT Recommendation field, a TWT Wake Interval Exponent field, or an Aligned field.

The TWT Request field occupies 1 octet, the TWT Setup Command field occupies 3 octets, the Trigger field occupies 1 octet, the Last Broadcast Parameter Set field occupies 1 octet, the Flow Type field occupies 1 octet, the Broadcast TWT Recommendation field occupies 3 octets, the TWT Wake Interval Exponent field occupies 5 octets, and the Aligned field occupies 1 octet.

The Broadcast TWT Info field includes at least one of a Restricted TWT Traffic Info Present field, a Restricted TWT Schedule Info field, a Broadcast TWT ID field, or a Broadcast TWT Persistence field.

The R-TWT Traffic Info Present field occupies 1 octet, the R-TWT Schedule Info field occupies 2 octets, the Broadcast TWT ID field occupies 5 octets, and the Broadcast TWT Persistence field occupies 8 octets.

The R-TWT Traffic Info Present field includes at least one of a Traffic Info Control field, a Restricted TWT DL TID Bitmap field, or a Restricted TWT UL TID Bitmap field.

The Traffic Info Control field occupies 1 octet, the Restricted TWT DL TID Bitmap field occupies 1 octet, and the Restricted TWT UL TID Bitmap field occupies 1 octet.

The Traffic Info Control field includes at least one of a DL TID Bitmap Valid field, an UL TID Bitmap Valid field, or a Reserved field.

The DL TID Bitmap Valid field occupies 1 octet, the UL TID Bitmap Valid field occupies 1 octet, and the Reserved field occupies 6 octets.

The above format of the R-TWT element is an exemplary case. In different embodiments or in different designs, at least one of positions of the R-TWT element, the Control field, the Negotiation Type field, the Broadcast TWT Parameter Set field, the Request Type field, the Broadcast TWT Info field, the R-TWT Traffic Info field, and the Traffic Info Control field in the frame, and sequences, octets, and bits of the R-TWT element, the Control field, the Negotiation Type field, the Broadcast TWT Parameter Set field, the Request Type field, the Broadcast TWT Info field, the R-TWT Traffic Info field, and the Traffic Info Control field and other fields may change, which is not limited in the present disclosure.

### 5. Multi-link negotiation TID-to-link mapping

According to the relevant standards, a TID-to-link mapping mechanism provides a specific method for an AP MLD and a non-AP MLD with established or being established multiple links on how to transmit uplink and downlink management frames and data frames with a TID value ranging from 0 to 7 in multiple links. By default, uplink and downlink of all TIDs are mapped to all established links. In a case where the TID-to-link mapping is negotiated according to relevant standards, a TID may be mapped to a subset of an established link set.

Specifically, a non-AP MLD carries a TID-to-Link Mapping element in an Association-Request frame and/or a Reassociation-Request frame to negotiate the TID-to-link mapping. After the multiple links are established and associated, the non-AP MLD transmits the TID-to-Link Mapping Request frame, and the AP MLD responds with the TID-to-Link Mapping Response frame to negotiate the TID-to-link mapping.

The AP MLD further transmits a TID-to-Link Mapping Request frame, and the non-AP MLD responds with a TID-to-Link Mapping Response frame to negotiate the TID-to-link mapping. The AP MLD further transmits an unsolicited TID-to-Link Mapping Response frame to recommend the TID-to-link mapping.

The AP MLD further carries a TID-to-Link Mapping element in a Beacon frame and/or a Probe Response frame to broadcast the TID-to-link mapping.

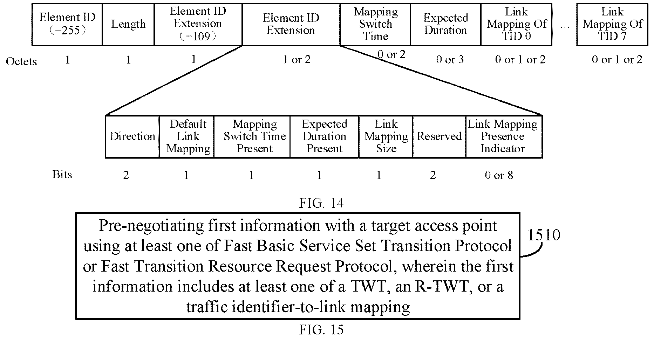

FIG. 14 is a schematic diagram of a structure of a TID-to-Link Mapping element in some practices. The TID-to-Link Mapping element includes at least one of an Element ID field, a Length field, an Element ID Extension field, a TID-To-Link Mapping Control field, a Mapping Switch Time field, an Expected Duration field, or a Link Mapping Of TID 0 field to a Link Mapping Of TID 7 field.

The Element ID field occupies 1 octet and takes a value of 255, the Length field occupies 1 octet, the Element ID Extension field occupies 1 octet, the TID-To-Link Mapping Control field occupies 1 or 2 octets, the Mapping Switch Time field occupies 0 or 2 octets, the Expected Duration field occupies 0 or 3 octets, each of the Link Mapping Of TID 0 field to the Link Mapping Of TID 7 field occupies 0, 1, or 2 octets.

The TID-To-Link Mapping Control field includes at least one of a Direction field, a Default Link Mapping field, a Mapping Switch Time Present field, an Expected Duration Present field, a Link Mapping Size field, a Reserved field, or a Link Mapping Presence Indicator field.

The Direction field occupies 2 octets, the Default Link Mapping field occupies 1 octet, the Mapping Switch Time Present field occupies 1 octet, the Expected Duration Present field occupies 1 octet, the Link Mapping Size field occupies 1 octet, the Reserved field occupies 2 octets, the a Link Mapping Presence Indicator field occupies 0 or 8 octets.

The above format of the TID-to-Link Mapping element of is an exemplary case. In different embodiments or in different designs, at least one of positions of the TID-to-link mapping element and the TID-To-Link Mapping Control field in the frame, and sequences, octets, and bits of the TID-to-Link Mapping element and the TID-To-Link Mapping Control field and other fields may change, which is not limited in the present disclosure.

Each bit in the Link Mapping Of TID n field indicates whether a corresponding link has mapping with a traffic at a TID value being 1.

The Link Mapping Of TID n field (where n = 0, 1, ... , 7) indicates the link(s) on which frames belonging to TID n are allowed to be sent (i.e., carries a bitmap of the links to which the TID n is mapped to). A value of 1 in bit position i (where i = 0, 1, ... , 14) of the Link Mapping Of TID n field indicates that TID n is mapped to the link associated with the link ID i for the direction as specified in the Direction subfield. A value of 0 in bit position i indicates that the TID n is not mapped to the link associated with the link ID i. When the Default Link Mapping subfield is set to 1, this field is not present.

In the process of data communication between the station and the access point, a current access point is transitioned to a target access point for the station. However, in a case where the current access point is transitioned to a target access point for the station, the station fails to pre-negotiate information with the target access point prior to being associated with the target access point, such that the communication interrupted by transition needs a longer time for resume.

FIG. 15 is a flowchart of a negotiation method for fast access point transition according to some embodiments of the present disclosure. The method is performed by a station. The method includes the following process.

**In S1510,** pre-negotiation for first information is performed with a target access point using at least one of Fast Basic Service Set Transition Protocol or Fast Transition Resource Request Protocol, wherein the first information includes at least one of a TWT, an R-TWT, or a TID-to-link mapping.

At least one resource type and resource descriptor are defined in relevant protocol before description of the negotiation method, as shown in Table 1.

**Table 1**

| Resource type | Definition of resource descriptor | Note |
|---|---|---|
| TWT | In a request: TWT | May be transmitted by FTO, the FTO is a non-AP STA, and a management information base variable dot11TWTOptionActivated in the FTO takes a value of true |
| | In a response: TWT | |
| R-TWT | In a request: R-TWT | May be transmitted by FTO, the FTO is a non-AP STA, and a management information base variable dot11RestrictedTWTOptionImplemented in the FTO takes a value of true |
| | In a response: R-TWT | |
| TID-to-link Mapping | In a request: TID-to-link Mapping | May be transmitted by FTO, the FTO is a non-AP STA, and a management information base variable dot11TIDtoLinkMappingActivated in the FTO takes a value of true |
| | In a response: TID-to-link Mapping | |

In some embodiments, instead of defined elements, at least one resource type and a corresponding parameter are added in the relevant standards, as shown in Table 2.

**Table 2**

| Resource type value | Meaning | Variable parameter |
|---|---|---|
| 3 | TWT | An individual TWT parameter set defined in Standard 9.4.2.199 (TWT element), and one or more broadcast TWT information defined in 9.4.2.199 (TWT element) |
| 4 | R-TWT | One or more broadcast TWT information carrying R-TWT traffic information defined in Standard 9.4.2.199 (TWT element) |
| 5 | TID-to-link Mapping | TID-to-link mapping control and TID n-to-link mapping defined in Standard 9.4.2.314 (TID-to-Link Mapping element) |

### First embodiments: pre-negotiation for the TWT in the link

In some embodiments, the station transmits a first frame to the target access point or a current access point using at least one of the Fast Basic Service Set Transition Protocol or the Fast Transition Resource Request Protocol. The first frame carries the first information.

The first frame includes at least one of an Authentication-Confirm frame, a Fast-Transition-Confirm frame, or a Reassociation-Request frame.

In some embodiments, the station receives a second frame from the target access point or the current access point using at least one of the Fast Basic Service Set Transition Protocol or the Fast Transition Resource Request Protocol. The second frame is configured to confirm the first information, or recommend second information different from the first information.

The second frame includes at least one of an Authentication-Ack frame, a Fast-Transition-Ack frame, or a Reassociation-Response frame.

For a non-MLD station supporting a TWT function, also referred to as an HE station or a legacy station, in a case where the station performs the FT, and the target access point supports the TWT function, at least one of an HE Capabilities element or an Extended Capabilities element in at least one of a Beacon frame or a Probe Response frame of the access point, and/or in a Neighbor Report element in a BSS Transition Management Request frame indicates that the station pre-negotiates at least one of the TWT or the R-TWT in the link using the Fast Transition Resource Request Protocol or the station pre-negotiates at least one of the TWT or the R-TWT in the link using the Fast Basic Service Set Transition Protocol in the reassociation process.

In some embodiments, the station transmits an Authentication-Confirm frame to the target access point using the Fast Transition Resource Request Protocol, and the Authentication-Confirm frame carries the first information; and the station receives an Authentication-Ack frame from the target access point using the Fast Transition Resource Request Protocol, and the Authentication-Ack frame is configured to determine the first information, or recommend second information different from the first information;
the station transmits a Fast- Transition-Confirm frame to the current access point using the Fast Transition Resource Request Protocol, and the Fast-Transition-Confirm frame carries the first information and an address of the target access point; and the station receives a Fast-Transition-Ack frame from the current access point using the Fast Transition Resource Request Protocol, and the Fast-Transition-Ack frame is configured to determine the first information or recommend second information different from the first information, and is generated based on information from the target access point; or
the station transmits a Reassociation-Request frame to the target access point using the Fast Basic Service Set Transition Protocol in a reassociation process, and the Reassociation-Request frame carries the first information; and the station receives a Reassociation-Response frame from the target access point using the Fast Basic Service Set Transition Protocol in the reassociation process, wherein the Reassociation-Response frame is configured to determine the first information, or recommend second information different from the first information.

In some embodiments, the first information is carried in an element corresponding to the first information in an RIC-Request field.

The second information is carried in an element corresponding to the second information in an RIC-Response field.

In some embodiments, the first information includes the TWT, and the TWT is used to request to set up at least one TWT and/or join at least one TWT that has been set up by the target access point.

Illustratively, in a case where interaction is performed in the over-the-air mode in the Fast Transition Resource Request Protocol, the station carries at least one TWT element in the RIC-Request field in the Authentication-Confirm frame transmitted to the target access point to request to set up at least one TWT and/or join at least one TWT that has been set up by the target access point. The target access point determines the request in the RIC-Response field in the Authentication-Ack frame transmitted to the station, or carries at least one TWT element to recommend a TWT different from the request TWT.

Alternatively, in a case where interaction is performed in the over-the-DS mode in the Fast Transition Resource Request Protocol, the station carries at least one TWT element in the RIC-Request field in the Fast-Transition-Confirm frame transmitted to the current access point to request to set up at least one TWT and/or join at least one TWT that has been set up by the target access point. The current access point forwards the request to the target access point through the DS, and receives the TWT different from the requested TWT that is determined or is recommended by the target access point through the DS. Then, the current access point determines the request in the RIC-Response field in the Fast-Transition-Ack frame transmitted to the station, or carries at least one TWT element to recommend a TWT different from the request TWT.

Alternatively, the station carries at least one TWT element in the RIC-Request field in the Reassociation-Request frame transmitted to the target access point to request to set up at least one TWT and/or join at least one TWT that has been set up by the target access point. The target access point determines the request in the RIC-Response field in the Reassociation-Response frame transmitted to the station, or carries at least one TWT element to recommend a TWT different from the request TWT.

For an MLD station supporting a TWT function, also referred to as an EHT station, in a case where the station performs the FT through any affiliated STA, and the target access point MLD supports the TWT function in an affiliated AP corresponding to the link (that is, an operating band or channel), at least one of an HE Capabilities element or an Extended Capabilities element in at least one of a Beacon frame or a Probe Response frame of the affiliated AP, and/or in a Neighbor Report element in a BSS Transition Management Request frame indicates that the affiliated STA pre-negotiates at least one of the TWT or the R-TWT in the link using the Fast Transition Resource Request Protocol or the affiliated STA pre-negotiates at least one of the TWT or the R-TWT in the link using the Fast Basic Service Set Transition Protocol in the reassociation process.

In some embodiments, the station is a station MLD, the target access point is a target access point MLD, and the current access point is a current access point MLD;
the station MLD transmits an Authentication-Confirm frame via an affiliated first station to a first access point affiliated with the target access point MLD using the Fast Transition Resource Request Protocol, and the Authentication-Confirm frame carries first information of a current link; and the station MLD receives, via the affiliated first station, an Authentication-Ack frame from the first access point affiliated with the target access point MLD using the Fast Transition Resource Request Protocol, and the Authentication-Ack frame is configured to determine the first information of the current link, or recommend second information different from the first information;
the station MLD transmits a Fast-Transition-Confirm frame via an affiliated first station to a second access point affiliated with the current access point MLD using the Fast Transition Resource Request Protocol, and the Fast-Transition-Confirm frame carries first information of a current link and a multi-link address of the target access point MLD; and the station MLD receives, via the affiliated first station, a Fast-Transition-Ack frame from a second access point affiliated with the current access point MLD using the Fast Transition Resource Request Protocol, and the Fast-Transition-Ack frame is configured to determine the first information of the current link or recommend second information different from the first information, and is generated based on information from the target access point MLD; or
the station MLD transmits a Reassociation-Request frame via an affiliated first station to a first access point affiliated with the target access point MLD using the Fast Basic Service Set Transition Protocol in a reassociation process, and the Reassociation-Request frame carries first information of a current link; and the station MLD receives, via the affiliated first station, a Reassociation-Response frame from the first access point affiliated with the target access point MLD using the Fast Basic Service Set Transition Protocol, and the Reassociation-Response frame is configured to determine the first information of the current link, or recommend second information different from the first information.

In some embodiments, time information dependent on at least one of the TWT or the R-TWT is acquired based on a Timestamp field in at least one of a Beacon frame or a Probe Response frame of the target access point.

The TWT negotiation process depends on time information the AP, and in a case of FT, time information of the target AP is acquired based on the Timestamp field in at least one of the Beacon frame or the Probe Response frame.

Similar to the third Related technology, the method according to the embodiments may be used to pre-negotiate the individual TWT or pre-join the broadcast TWT.

### Second embodiments: pre-negotiation for the R-TWT in the current link

Similar to first embodiments, for an MLD station supporting an R-TWT function, also referred to as an EHT station, in a case where the station performs the FT through any affiliated STA, and the target access point MLD supports the R-TWT function in an affiliated AP corresponding to the link (that is, an operating band or channel), a Restricted TWT Support subfield in an EHT Capabilities element in at least one of a Beacon frame or a Probe Response frame of the affiliated AP, and/or in a Neighbor Report element in a BSS Transition Management Request frame indicates that the affiliated STA performs pre-negotiation using the Fast Transition Resource Request Protocol to join the R-TWT in the link (that is, become a member of the R-TWT) or the affiliated STA performs pre-negotiation using the Fast Basic Service Set Transition Protocol in the reassociation process to join the R-TWT in the link (that is, become a member of the R-TWT).

Different from first embodiments, the TWT element includes a Restricted TWT Traffic Info field to indicate that the TWT is an R-TWT.

In some embodiments, the first information includes the R-TWT, and the R-TWT is a broadcast TWT.

Validity of at least one of a restricted TWT DL TID bitmap or a restricted TWT UL TID bitmap indicated by the Restricted TWT Traffic Info field depends on the TID-to-link mapping that is negotiated by the MLD station and the target access point MLD upon association.

In default, the default TID-to-link mapping established in associating the MLD station with the target access point MLD means that uplink and downlink of all TIDs are mapped to each established link, and thus the Validity of R-TWT is not affected. In some case, for example, in a case where at least one of the target access point MLD or the MLD station expects to negotiate a mapping different from the default TID-to-link mapping, a corresponding traffic in the bitmap of the R-TWT is invalid in a case where an uplink/downlink traffic corresponding to the TID is not mapped to the link. For this problem, at least one of the following solutions are proposed.

**Case 1:** in some embodiments, a Traffic Information field in the R-TWT is configured based on a first TID-to-link mapping and a requirement of a latency-sensitive traffic.

The first TID-to-link mapping is advertised by an affiliated access point of the target access point MLD.

In a case where the affiliated access point of the target access point MLD advertises a TID-to-link mapping in a Beacon Frame and a Probe Response frame, the MLD station sets the R-TWT Traffic Info field in the carried TWT element based on the advertised TID-to-link mapping and the requirement of the latency-sensitive traffic (the unstringent latency traffic requirement) in transmitting at least one of the Authentication-Confirm frame, the Fast-Transition-Confirm frame, or the Reassociation-Request frame from the affiliated station.

**Case 2:** In some embodiments, a Traffic Information field in the R-TWT is configured based on a second TID-to-link mapping and a requirement of a latency-sensitive traffic.

The second TID-to-link mapping is to be negotiated by the station MLD with the target access point MLD.

In a case where the affiliated access point of the target access point MLD does not advertise a TID-to-link mapping in a Beacon frame and a Probe Response frame, and the target access point MLD supports a TID-to-link mapping negotiation function, the MLD station sets the R-TWT Traffic Info field in the carried TWT element based on the requirement of the latency-sensitive traffic (the low latency traffic requirement) and the TID-to-link mapping that is to be negotiated (that is, the TID-to-link mapping that is to be negotiated in the association process or upon association) in transmitting at least one of the Authentication-Confirm frame, the Fast-Transition-Confirm frame, or the Reassociation-Request frame from the affiliated station.

In a case where the TID-to-link mapping that is to be negotiated by the target access point MLD with the MLD station causes invalidity of the corresponding traffic in the bitmap of the R-TWT, the target access point MLD needs to inform the current access point to carry at least one TWT element in the at least one of the Authentication-Ack frame, the Fast-Transition-Ack frame, or the Reassociation-Response frame to recommend the TWT different from the request TWT.

**Case 3:** in a case where the target access point MLD supports the TID-to-link mapping negotiation function, in transmitting at least one of the Authentication-Confirm frame, the Fast-Transition-Confirm frame, or the Reassociation-Request frame from the affiliated station, the MLD station carries TWT element and further carries at least one TID-to-Link Mapping element (for details, reference may be made to fourth embodiments) to pre-negotiate the TID-to-link mapping matched with the R-TWT.

### Third embodiments: pre-negotiation for at least one of the TWT or the R-TWT in another link or a plurality of links

In some embodiments, the station is a station MLD, the target access point is a target access point MLD, and the current access point is a current access point MLD; and n access points affiliated with the target access point MLD support pre-negotiation for the first information, and n is a positive integer;
the station MLD transmits an Authentication-Confirm frame via an affiliated first station to a first access point affiliated with the target access point MLD using the Fast Transition Resource Request Protocol, and the Authentication-Confirm frame carries first information of at least one link; and the station MLD receives, via the affiliated first station, an Authentication-Ack frame from the first access point affiliated with the target access point MLD using the Fast Transition Resource Request Protocol, and the Authentication-Ack frame is configured to determine the first information of the at least one link, or recommend second information different from the first information;
the station MLD transmits a Fast-Transition-Confirm frame via an affiliated first station to a second access point affiliated with the current access point MLD using the Fast Transition Resource Request Protocol, and the Fast-Transition-Confirm frame carries first information of at least one link and a multi-link address of the target access point MLD; and the station MLD receives, via the affiliated first station, a Fast-Transition-Ack frame from an second access point affiliated with the current access point MLD using the Fast Transition Resource Request Protocol, and the Fast-Transition-Ack frame is configured to determine the first information of the at least one link or recommend second information different from the first information, and is generated based on information from the target access point MLD; or
the station MLD transmits a Reassociation-Request frame via an affiliated first station to a first access point affiliated with the target access point MLD using the Fast Basic Service Set Transition Protocol in a reassociation process, and the Reassociation-Request frame carries first information of at least one link; and the station MLD receives, via the affiliated first station, a Reassociation-Response frame from the first access point affiliated with the target access point MLD using the Fast Basic Service Set Transition Protocol, and the Reassociation-Response frame is configured to determine the first information of the at least one link, or recommend second information different from the first information.

The at least one link is a link corresponding to at least one affiliated access point in the n affiliated access points.

Similar to first embodiments and second embodiments, for an MLD station supporting at least one of a TWT function or an R-TWT function, also referred to as an EHT station, in a case where the station performs the FT through any affiliated STA, and at least one affiliated access point (not limited to a link of the affiliated station) of the target access point MLD supports the at least one of the TWT function or the R-TWT function, a Restricted TWT Support subfield in an EHT Capabilities element in at least one of a Beacon frame or a Probe Response frame of the affiliated AP, and/or in a Neighbor Report element in a BSS Transition Management Request frame indicates that the affiliated STA pre-negotiates at least one of the TWT or the R-TWT on a link corresponding to the at least one affiliated access point of the target access point MLD using the Fast Transition Resource Request Protocol or the affiliated STA pre-negotiates at least one of the TWT or the R-TWT on a link corresponding to the at least one affiliated access point of the target access point MLD using the Fast Basic Service Set Transition Protocol in the reassociation process.

Different from first embodiments, at least one TWT element includes a Link ID Bitmap field to indicate a link of the TWT. The Link ID Bitmap field is configured based on a value of a Link ID in the target access point MLD.

In some embodiments, the link identifier in the target access point MLD is acquired based on at least one of a Beacon frame, or a Basic Multi-Link Element or a Reduced Neighbor Report element in a Multi-Link Probe Response frame.

For example, the MLD is associated with Link 0 (a 2.4 GHz band link, with a link ID of 0) and Link 1 (a 5 GHz band link, with a link ID of 1) of the current access point MLD, but the corresponding link of the target access point MLD is Link 0 (a 2.4 GHz band link, with a link ID of 0) and Link 2 (a 5 GHz band link, with a link ID of 2), and Link 1 thereof is a 6 GHz band link. Prior to the FT, the MLD acquires link identification information of the target access point MLD in the discovery process, for example, through the Basic Multi-Link element and the Reduced Neighbor Report element in at least one of the Beacon frame or Multi-Link Probe Response frame.

In a case where the individual TWT is negotiated, a format of at least one TWT element is the same as the format of the Individual TWT element in the third Related technology. Each TWT element indicates scheduling information of AN individual TWT on a link; or each TWT element is modified to include a plurality of Individual TWT Parameter Set fields, and each Individual TWT Parameter Set field indicates scheduling information of an individual TWT on a link.

In some embodiments, the first information includes: at least one TWT element, and each of the at least one TWT element indicates a first TWT or the R-TWT; and a link identifier bitmap, and the link identifier bitmap indicates a link of the first TWT or the R-TWT.

In some embodiments, each of the at least one TWT element carries the link identifier bitmap, a first TWT element in the at least one TWT element carries the link identifier bitmap, a last TWT element in the at least one TWT element carries the link identifier bitmap, or a part of TWT elements in the at least one TWT element carry the link identifier bitmap.

In some embodiments, in a case where the first TWT is a broadcast TWT and a first field outside a broadcast TWT parameter set takes a first value, each of the at least one TWT element carries the link identifier bitmap, the first TWT element in the at least one TWT element carries the link identifier bitmap, or the last TWT element in the at least one TWT element carries the link identifier bitmap. The first field is a field indicating whether the link identifier bitmap is present.

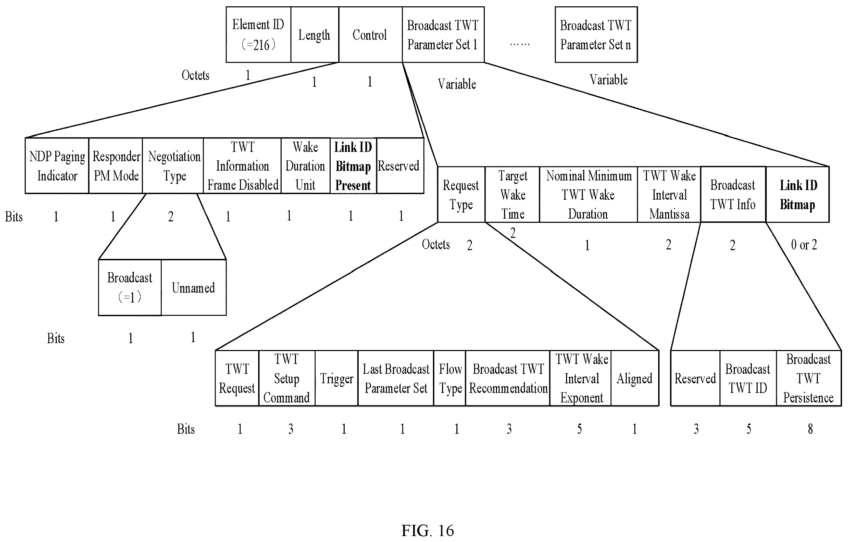

In some embodiments, in a case where the individual TWT is negotiated, a Link ID Bitmap field is added in the at least one TWT element, as shown in FIG. 16, and each TWT element indicates scheduling information of one or more broadcast TWTs on a link.

FIG. 16 is a schematic diagram of a structure of a Broadcast TWT element according to some embodiments of the present disclosure. The Broadcast TWT element includes at least one of an Element ID field, a Length field, a Control field, or a Broadcast TWT Parameter Set field 1 to a Broadcast TWT Parameter Set field n. n is a positive integer.

The Element ID field occupies 1 octet and takes a value of 216, the Length field occupies 1 octet, the Control field occupies 1 octet, and octets of all Broadcast TWT Parameter Set fields are variable.

The Control field includes at least one of an NDP Paging Indicator field, a Responder PM Mode field, a Negotiation Type field, a TWT Information Frame Disabled field, a Wake Duration Unit field, a Link ID Bitmap Present field, or a Reserved field.

The NDP Paging Indicator field occupies 1 octet, the Responder PM Mode field occupies 1 octet, the Negotiation Type field occupies 2 octets, the TWT Information Frame Disabled field occupies 1 octet, the Wake Duration Unit field occupies 1 octet, the Link ID Bitmap Present field occupies 1 octet, and the Reserved field occupies 1 octet.

The Negotiation Type field includes at least one of a Broadcast field or an Unnamed field.

The Broadcast field occupies 1 octet and takes a value of 1, and the Unnamed field occupies 1 octet.

The Broadcast TWT Parameter Set field 1 includes at least one of a Request Type field, a Target Wake Time field, a Nominal Minimum TWT Wake Duration field, a TWT Wake Interval Mantissa field, a Broadcast TWT Info field, or a Link ID Bitmap field.

The Request Type field occupies 2 octets, the Target Wake Time field occupies 2 octets, the Nominal Minimum TWT Wake Duration field occupies 1 octet, the TWT Wake Interval Mantissa field occupies 2 octets, the Broadcast TWT Info field occupies 2 octets, and the Link ID Bitmap field occupies 0 or 2 octets.

The Request Type field includes at least one of a TWT Request field, a TWT Setup Command field, a Trigger field, a Last Broadcast Parameter Set field, a Flow Type field, a Broadcast TWT Recommendation field, a TWT Wake Interval Exponent field, or an Aligned field.

The TWT Request field occupies 1 octet, the TWT Setup Command field occupies 3 octets, the Trigger field occupies 1 octet, the Last Broadcast Parameter Set field occupies 1 octet, the Flow Type field occupies 1 octet, the Broadcast TWT Recommendation field occupies 3 octets, the TWT Wake Interval Exponent field occupies 5 octets, and the Aligned field occupies 1 octet.

The Broadcast TWT Info field includes at least one of a Reserved field, a Broadcast TWT ID field, or a Broadcast TWT Persistence field.

The Reserved field occupies 3 octets, the Broadcast TWT ID field occupies 5 octets, and the Broadcast TWT Persistence field occupies 8 octets.

The above format of the Broadcast TWT element is an exemplary case. In different embodiments or in different designs, at least one of positions of the Broadcast TWT element, the Control field, the Negotiation Type field, the Broadcast TWT Parameter Set field, the Request Type field, and the Broadcast TWT Info field in the frame, and sequences, octets, and bits of the Broadcast TWT element, the Control field, the Negotiation Type field, the Broadcast TWT Parameter Set field, the Request Type field, and the Broadcast TWT Info field and other fields may change, which is not limited in the present disclosure.

In a case where the Link ID Bitmap Present field in the TWT element indicates that the link ID bitmap is present (1 indicates that the link ID bitmap is present, and 0 indicates that the link ID bitmap is not present), each Broadcast TWT Parameter Set field in the TWT element includes the Link ID Bitmap field to indicate a link of the TWT, or, a first Broadcast TWT Parameter Set field in the TWT element includes the Link ID Bitmap field to indicate a link of the TWT, and other Broadcast TWT Parameter Set fields do not includes the Link ID Bitmap field; or, a last Broadcast TWT Parameter Set field in the TWT element includes the Link ID Bitmap field to indicate a link of the TWT, and other Broadcast TWT Parameter Set fields do not includes the Link ID Bitmap field.

In some embodiments in a case where the first TWT is a broadcast TWT and a first field in the TWT parameter set of the part of TWT elements takes a first value, the part of TWT elements carry the link identifier bitmap.

The first field is a field indicating whether the link identifier bitmap is present.

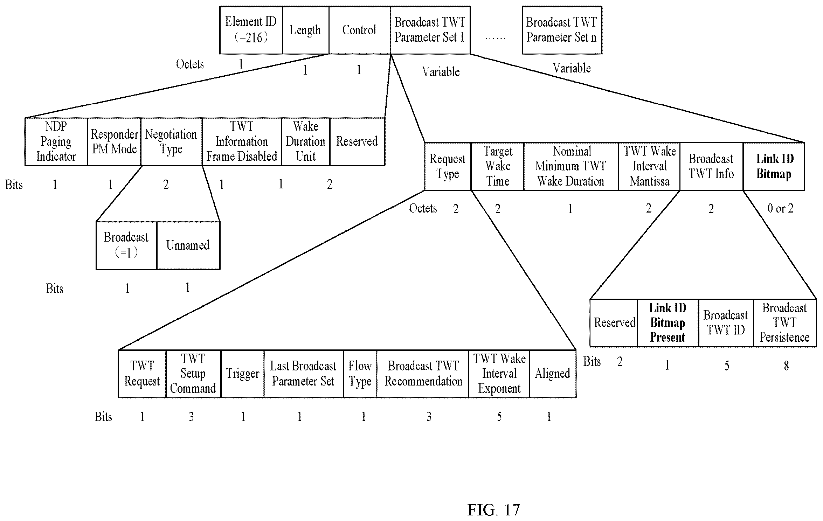

In a case where the broadcast TWT is negotiated, a Link ID Bitmap field is added in the at least one TWT element, as illustrated in FIG. 17, and each Broadcast TWT Parameter Set field in a TWT element separately indicates scheduling information of a broadcast TWT on a link.

FIG. 17 is a schematic diagram of a structure of a Broadcast TWT element according to some embodiments of the present disclosure. The Broadcast TWT element includes at least one of an Element ID field, a Length field, a Control field, or a Broadcast TWT Parameter Set field 1 to a Broadcast TWT Parameter Set field n. n is a positive integer.

The Element ID field occupies 1 octet and takes a value of 216, the Length field occupies 1 octet, the Control field occupies 1 octet, and octets of all Broadcast TWT Parameter Set fields are variable.

The Control field includes at least one of an NDP Paging Indicator field, a Responder PM Mode field, a Negotiation Type field, a TWT Information Frame Disabled field, a Wake Duration Unit field, or a Reserved field.

The NDP Paging Indicator field occupies 1 octet, the Responder PM Mode field occupies 1 octet, the Negotiation Type field occupies 2 octets, the TWT Information Frame Disabled field occupies 1 octet, the Wake Duration Unit field occupies 1 octet, and the Reserved field occupies 2 octets.

The Negotiation Type field includes at least one of a Broadcast field or an Unnamed field.

The Broadcast field occupies 1 octet and takes a value of 1, and the Unnamed field occupies 1 octet.

The Broadcast TWT Parameter Set field 1 includes at least one of a Request Type field, a Target Wake Time field, a Nominal Minimum TWT Wake Duration field, a TWT Wake Interval Mantissa field, a Broadcast TWT Info field, or a Link ID Bitmap field.

The Request Type field occupies 2 octets, the Target Wake Time field occupies 2 octets, the Nominal Minimum TWT Wake Duration field occupies 1 octet, the TWT Wake Interval Mantissa field occupies 2 octets, the Broadcast TWT Info field occupies 2 octets, and the Link ID Bitmap field occupies 0 or 2 octets.

The Request Type field includes at least one of a TWT Request field, a TWT Setup Command field, a Trigger field, a Last Broadcast Parameter Set field, a Flow Type field, a Broadcast TWT Recommendation field, a TWT Wake Interval Exponent field, or an Aligned field.

The TWT Request field occupies 1 octet, the TWT Setup Command field occupies 3 octets, the Trigger field occupies 1 octet, the Last Broadcast Parameter Set field occupies 1 octet, the Flow Type field occupies 1 octet, the Broadcast TWT Recommendation field occupies 3 octets, the TWT Wake Interval Exponent field occupies 5 octets, and the Aligned field occupies 1 octet.

The Broadcast TWT Info field includes at least one of a Reserved field, a Link ID Bitmap Present field, a Broadcast TWT ID field, or a Broadcast TWT Persistence field.

The Reserved field occupies 2 octets, the Link ID Bitmap Present field occupies 1 octet, the Broadcast TWT ID field occupies 5 octets, and the Broadcast TWT Persistence field occupies 8 octets.

The above format of the Broadcast TWT element is an exemplary case. In different embodiments or in different designs, at least one of positions of the Broadcast TWT element, the Control field, the Negotiation Type field, the Broadcast TWT Parameter Set field, the Request Type field, and the Broadcast TWT Info field in the frame, and sequences, octets, and bits of the Broadcast TWT element, the Control field, the Negotiation Type field, the Broadcast TWT Parameter Set field, the Request Type field, and the Broadcast TWT Info field and other fields may change, which is not limited in the present disclosure.

In a case where the Link ID Bitmap Present field in the broadcast TWT parameter set field indicates that the link ID bitmap is present (1 indicates that the link ID bitmap is present, and 0 indicates that the link ID bitmap is not present), the broadcast TWT parameter set field includes the Link ID Bitmap field to indicate a link of the TWT; or, in a case where the Link ID Bitmap Present field in the broadcast TWT parameter set field indicates that the link ID bitmap is not present (1 indicates that the link ID bitmap is present, and 0 indicates that the link ID bitmap is not present), the broadcast TWT parameter set field does not include the Link ID Bitmap field, and the link of the TWT is a link interacted with the current frame.

Different from second embodiments, at least one TWT element includes the Link ID Bitmap field to indicate a link of the TWT.

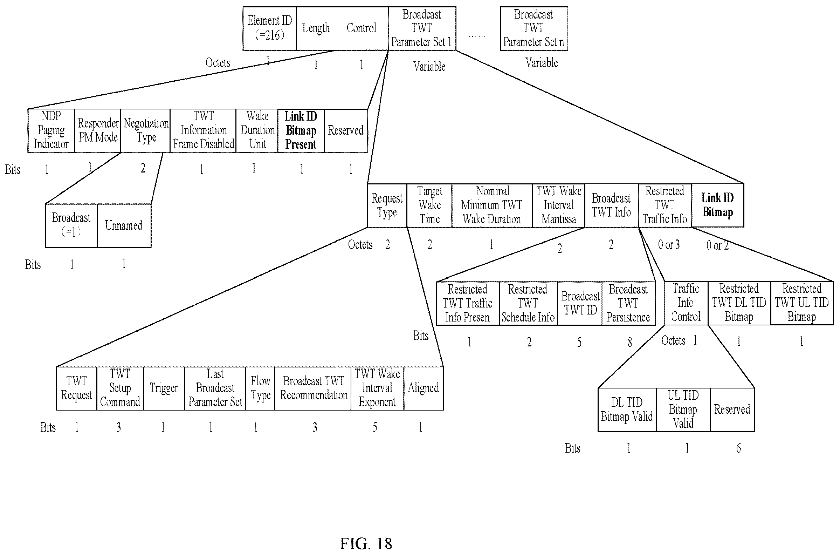

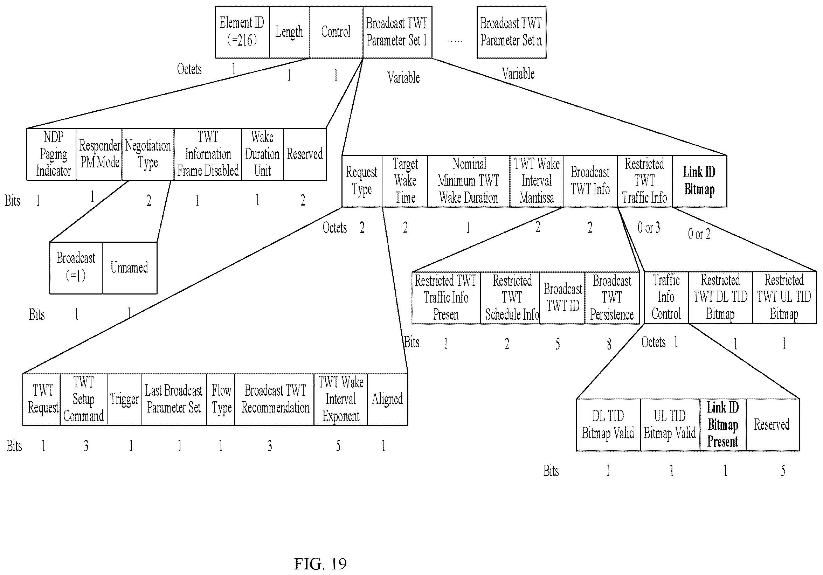

Similar to the broadcast TWT, the Link ID Bitmap field in the R-TWT element are arranged in two modes, as shown in FIG. 18 and FIG. 19.

FIG. 18 is a schematic diagram of a structure of an R-TWT element according to some embodiments of the present disclosure. The R-TWT element includes at least one of an Element ID field, a Length field, a Control field, or a Broadcast TWT Parameter Set field 1 to a Broadcast TWT Parameter Set field n. n is a positive integer.

The Element ID field occupies 1 octet and takes a value of 216, the Length field occupies 1 octet, the Control field occupies 1 octet, and octets of all Broadcast TWT Parameter Set fields are variable.

The Control field includes at least one of an NDP Paging Indicator field, a Responder PM Mode field, a Negotiation Type field, a TWT Information Frame Disabled field, a Wake Duration Unit field, a Link ID Bitmap Present field, or a Reserved field.

The NDP Paging Indicator field occupies 1 octet, the Responder PM Mode field occupies 1 octet, the Negotiation Type field occupies 2 octets, the TWT Information Frame Disabled field occupies 1 octet, the Wake Duration Unit field occupies 1 octet, the Link ID Bitmap Present field occupies 1 octet, and the Reserved field occupies 1 octet.

The Negotiation Type field includes at least one of a Broadcast field or a Unnamed field.

The Broadcast field occupies 1 octet and takes a value of 1, and the Unnamed field occupies 1 octet.

The Broadcast TWT Parameter Set field 1 includes at least one of a Request Type field, a Target Wake Time field, a Nominal Minimum TWT Wake Duration field, a TWT Wake Interval Mantissa field, a Broadcast TWT Info field, a Restricted TWT Traffic Info field, or a Link ID Bitmap field.

The Request Type field occupies 2 octets, the Target Wake Time field occupies 2 octets, the Nominal Minimum TWT Wake Duration field occupies 1 octet, the TWT Wake Interval Mantissa field occupies 2 octets, the Broadcast TWT Info field occupies 2 octets, the R-TWT Traffic Info field occupies 0 or 3 octets, and the Link ID Bitmap field occupies 0 or 2 octets.

The Request Type field includes at least one of a TWT Request field, a TWT Setup Command field, a Trigger field, a Last Broadcast Parameter Set field, a Flow Type field, a Broadcast TWT Recommendation field, a TWT Wake Interval Exponent field, or an Aligned field.

The TWT Request field occupies 1 octet, the TWT Setup Command field occupies 3 octets, the Trigger field occupies 1 octet, the Last Broadcast Parameter Set field occupies 1 octet, the Flow Type field occupies 1 octet, the Broadcast TWT Recommendation field occupies 3 octets, the TWT Wake Interval Exponent field occupies 5 octets, and the Aligned field occupies 1 octet.

The Broadcast TWT Info field includes at least one of a Restricted TWT Traffic Info Present field, a Restricted TWT Schedule Info field, a Broadcast TWT ID field, or a Broadcast TWT Persistence field.

The R-TWT Traffic Info Present field occupies 1 octet, the R-TWT Schedule Info field occupies 2 octets, the Broadcast TWT ID field occupies 5 octets, and the Broadcast TWT Persistence field occupies 8 octets.

The R-TWT Traffic Info Present field includes at least one of a Traffic Info Control field, a Restricted TWT DL TID Bitmap field, or a Restricted TWT UL TID Bitmap field.

The Traffic Info Control field occupies 1 octet, the Restricted TWT DL TID Bitmap field occupies 1 octet, and the Restricted TWT UL TID Bitmap field occupies 1 octet.

The Traffic Info Control field includes at least one of a DL TID Bitmap Valid field, an UL TID Bitmap Valid field, or a Reserved field.

The DL TID Bitmap Valid field occupies 1 octet, the UL TID Bitmap Valid field occupies 1 octet, and the Reserved field occupies 6 octets.

The above format of the R-TWT element is an exemplary case. In different embodiments or in different designs, at least one of positions of the R-TWT element, the Control field, the Negotiation Type field, the Broadcast TWT Parameter Set field, the Request Type field, the Broadcast TWT Info field, the R-TWT Traffic Info field, and the Traffic Info Control field in the frame, and sequences, octets, and bits of the R-TWT element, the Control field, the Negotiation Type field, the Broadcast TWT Parameter Set field, the Request Type field, the Broadcast TWT Info field, the R-TWT Traffic Info field, and the Traffic Info Control field and other fields may change, which is not limited in the present disclosure.

FIG. 19 is a schematic diagram of a structure of an R-TWT element according to some embodiments of the present disclosure. The R-TWT element includes at least one of an Element ID field, a Length field, a Control field, or a Broadcast TWT Parameter Set field 1 to a Broadcast TWT Parameter Set field n. n is a positive integer.

The Element ID field occupies 1 octet and takes a value of 216, the Length field occupies 1 octet, the Control field occupies 1 octet, and octets of all Broadcast TWT Parameter Set fields are variable.

The Control field includes at least one of an NDP Paging Indicator field, a Responder PM Mode field, a Negotiation Type field, a TWT Information Frame Disabled field, a Wake Duration Unit field, or a Reserved field.

The NDP Paging Indicator field occupies 1 octet, the Responder PM Mode field occupies 1 octet, the Negotiation Type field occupies 2 octets, the TWT Information Frame Disabled field occupies 1 octet, the Wake Duration Unit field occupies 1 octet, and the Reserved field occupies 2 octets.

The Negotiation Type field includes at least one of a Broadcast field or an Unnamed field.

The Broadcast field occupies 1 octet and takes a value of 1, and the Unnamed field occupies 1 octet.

The Broadcast TWT Parameter Set field 1 includes at least one of a Request Type field, a Target Wake Time field, a Nominal Minimum TWT Wake Duration field, a TWT Wake Interval Mantissa field, a Broadcast TWT Info field, a Restricted TWT Traffic Info field, or a Link ID Bitmap field.

The Request Type field occupies 2 octets, the Target Wake Time field occupies 2 octets, the Nominal Minimum TWT Wake Duration field occupies 1 octet, the TWT Wake Interval Mantissa field occupies 2 octets, the Broadcast TWT Info field occupies 2 octets, the R-TWT Traffic Info field occupies 0 or 3 octets, and the Link ID Bitmap field occupies 0 or 2 octets.

The Request Type field includes at least one of a TWT Request field, a TWT Setup Command field, a Trigger field, a Last Broadcast Parameter Set field, a Flow Type field, a Broadcast TWT Recommendation field, a TWT Wake Interval Exponent field, or an Aligned field.

The TWT Request field occupies 1 octet, the TWT Setup Command field occupies 3 octets, the Trigger field occupies 1 octet, the Last Broadcast Parameter Set field occupies 1 octet, the Flow Type field occupies 1 octet, the Broadcast TWT Recommendation field occupies 3 octets, the TWT Wake Interval Exponent field occupies 5 octets, and the Aligned field occupies 1 octet.

The Broadcast TWT Info field includes at least one of a Restricted TWT Traffic Info Present field, a Restricted TWT Schedule Info field, a Broadcast TWT ID field, or a Broadcast TWT Persistence field.

The R-TWT Traffic Info Present field occupies 1 octet, the R-TWT Schedule Info field occupies 2 octets, the Broadcast TWT ID field occupies 5 octets, and the Broadcast TWT Persistence field occupies 8 octets.

The R-TWT Traffic Info Present field includes at least one of a Traffic Info Control field, a Restricted TWT DL TID Bitmap field, or a Restricted TWT UL TID Bitmap field.

The Traffic Info Control field occupies 1 octet, the Restricted TWT DL TID Bitmap field occupies 1 octet, and the Restricted TWT UL TID Bitmap field occupies 1 octet.

The Traffic Info Control field includes at least one of a DL TID Bitmap Valid field, an UL TID Bitmap Valid field, a Link ID Bitmap Present field, or a Reserved field.

The DL TID Bitmap Valid field occupies 1 octet, the UL TID Bitmap Valid field occupies 1 octet, the Link ID Bitmap Present field occupies 1 octet, and the Reserved field occupies 5 octets.

The above format of the R-TWT element is an exemplary case. In different embodiments or in different designs, at least one of positions of the R-TWT element, the Control field, the Negotiation Type field, the Broadcast TWT Parameter Set field, the Request Type field, the Broadcast TWT Info field, the R-TWT Traffic Info field, and the Traffic Info Control field in the frame, and sequences, octets, and bits of the R-TWT element, the Control field, the Negotiation Type field, the Broadcast TWT Parameter Set field, the Request Type field, the Broadcast TWT Info field, the R-TWT Traffic Info field, and the Traffic Info Control field and other fields may change, which is not limited in the present disclosure.

In some embodiments, the current link is indicated by at least one of: use of the current link by the current access point MLD for interaction in a case where the current access point MLD is interacted with the target access point MLD; or a link identifier bitmap in the first information, wherein the link identifier bitmap is used to indicate the current link.

### Fourth embodiments: pre-negotiation for TID-to-link mapping of the MLD

For an MLD station, also referred to as an EHT station, in a case where the station performs the FT through any affiliated STA, and the target access point MLD supports a TID-to-link mapping negotiation function, a TID-to-link Mapping Negotiation Support subfield in an MLD Capabilities and Operations field in at least one of a Beacon frame or a Probe Response frame of the affiliated AP indicates that the affiliated STA pre-negotiates the TID-to-link mapping with the target access point using the Fast Transition Resource Request Protocol.

For example, in a case where the Over-the-air FT Resource Request Protocol is used, and the MLD station performs the FT through any affiliated STA, the MLD station carries at least one TID-to-Link Mapping element in an RIC-Request field in the Authentication-Confirm frame transmitted to an affiliated access point corresponding to the link (that is, an operating band or channel) of the target access point MLD to request to establish the TID-to-link mapping with the target access point MLD. The affiliated access point of the target access point MLD determines the request in the RIC-Response field in the Authentication-Ack frame transmitted to the affiliated STA of the MLD station, or carries at least one TID-to-Link Mapping element to recommend a TID-to-link mapping different from the request TID-to-link mapping.

For example, in a case where the Over-the-DS FT Resource Request Protocol is used, and the MLD station carries at least one TID-to-Link Mapping element in an RIC-Request field in the Fast-Transition-Confirm frame transmitted from any affiliated STA to an affiliated access point corresponding to the link (that is, an operating band or channel) of the current access point MLD to request to establish the TID-to-link mapping with the target access point MLD. The current access point MLD forwards the request to the target access point MLD through the DS, and receives the TID-to-link mapping different from the request TID-to-link mapping that is determined or is recommended by the target access point MLD through the DS. Then, the affiliated STA of the current access point MLD determines the request in the RIC-Response field in the Fast-Transition-Ack frame transmitted to the affiliated STA of the MLD station, or carries at least one TID-to-Link Mapping element to recommend the TID-to-link mapping different from the request TID-to-link mapping.

In this case, the MLD station does not need to carry the TID-to-Link Mapping element in at least one of the Association-Request frame or the Reassociation-Request frame that are transmitted to the target access point MLD. In a case where the MLD station recarries the at least one of the Association-Request frame or the Reassociation-Request frame, the pre-negotiated TID-to-link mapping is covered by a new TID-to-link mapping negotiated in the association process.

In some embodiments, the link ID involved in the first information is configured based on the link ID in the target access point MLD.

The Link Mapping Of TID field in the TID-to-Link Mapping element is configured based on the link ID in the target access point MLD. For example, the MLD is associated with Link 0 (a 2.4 GHz band link, with a link ID of 0) and Link 1 (a 5 GHz band link, with a link ID of 1) of the current access point MLD, but the corresponding link of the target access point MLD is Link 0 (a 2.4 GHz band link, with a link ID of 0) and Link 2 (a 5 GHz band link, with a link ID of 2), and Link 1 thereof is a 6 GHz band link. Prior to the FT, the MLD acquires link identification information of the target access point MLD in the discovery process, for example, through the Basic Multi-Link element and the Reduced Neighbor Report element in at least one of the Beacon frame or Multi-Link Probe Response frame.

Any one, two, or three of the first embodiments, second embodiments, and the third embodiments may be arbitrarily combined with fourth embodiments, which is not limited in the present disclosure.

In summary, in the method according to the present disclosure, pre-negotiation of the first information is performed with the target access point using at least one of the Fast Basic Service Set Transition Protocol or the Fast Transition Resource Request Protocol. The first information includes at least one of the TWT, the R-TWT, or the TID-to-link mapping, such that pre-negotiation of at least one of the TWT, the R-TWT, or the TID-to-link mapping is performed, and the communication interrupted by transition is resumed fast.

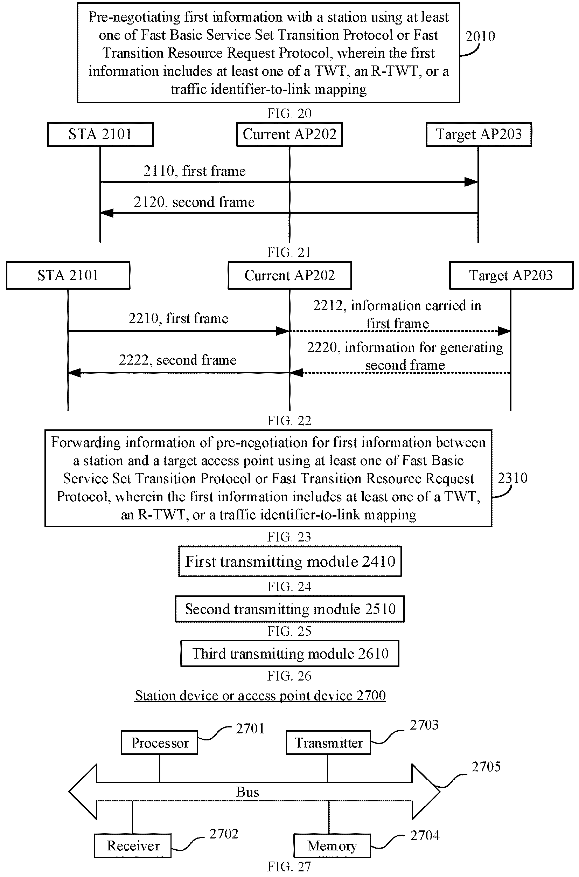

FIG. 20 is a flowchart of a negotiation method for fast access point transition according to some embodiments of the present disclosure. The method is performed by a target access point. The method includes the following process.

**In S2010,** pre-negotiation for first information is performed with a station using at least one of Fast Basic Service Set Transition Protocol or Fast Transition Resource Request Protocol, wherein the first information includes at least one of a TWT, an R-TWT, or a TID-to-link mapping.

In some embodiments, the station transmits a first frame to the target access point or a current access point using at least one of the Fast Basic Service Set Transition Protocol or the Fast Transition Resource Request Protocol. The first frame carries the first information.

In some embodiments, the first frame includes at least one of an Authentication-Confirm frame, a Fast-Transition-Confirm frame, or a Reassociation-Request frame.

In some embodiments, the station receives a second frame from the target access point or the current access point using at least one of the Fast Basic Service Set Transition Protocol or the Fast Transition Resource Request Protocol. The second frame is configured to confirm the first information, or recommend second information different from the first information.

In some embodiments, the second frame includes at least one of an Authentication-Ack frame, a Fast-Transition-Ack frame, or a Reassociation-Response frame.

In some embodiments, the target access point transmits an Authentication-Confirm frame to the target access point using the Fast Transition Resource Request Protocol, wherein the Authentication-Confirm frame carries the first information; and the target access point receives an Authentication-Ack frame from the target access point using the Fast Transition Resource Request Protocol, wherein the Authentication-Ack frame is configured to determine the first information, or recommend second information different from the first information;

the target access point transmits a Fast-Transition-Confirm frame to the current access point using the Fast Transition Resource Request Protocol, wherein the Fast-Transition-Confirm frame carries the first information and an address of the target access point; and the target access point receives a Fast-Transition-Ack frame from the current access point using the Fast Transition Resource Request Protocol, wherein the Fast-Transition-Ack frame is configured to determine the first information or recommend second information different from the first information, and is generated based on information from the target access point; or

the target access point transmits a Reassociation-Request frame to the target access point using the Fast Basic Service Set Transition Protocol in a reassociation process, wherein Reassociation-Request frame carries the first information; and the target access point receives a Reassociation-Response frame from the target access point using the Fast Basic Service Set Transition Protocol in the reassociation process, wherein the Reassociation-Response frame is configured to determine the first information, or recommend second information different from the first information.

In some embodiments, the station is a station MLD, the target access point is a target access point MLD, and the current access point is a current access point MLD;
the target access point MLD transmits an Authentication-Confirm frame via an affiliated first station to a first access point affiliated with the target access point MLD using the Fast Transition Resource Request Protocol, wherein the Authentication-Confirm frame carries first information of a current link; and the target access point MLD receives, via the affiliated first station, an Authentication-Ack frame from the first access point affiliated with the target access point MLD using the Fast Transition Resource Request Protocol, wherein the Authentication-Ack frame is configured to determine the first information of the current link, or recommend second information different from the first information; or
the target access point MLD transmits a Fast-Transition-Confirm frame via an affiliated first station to a second access point affiliated with the current access point MLD using the Fast Transition Resource Request Protocol, wherein the Fast-Transition-Confirm frame carries first information of a current link and a multi-link address of the target access point MLD; and the target access point MLD receives, via the affiliated first station, a Fast-Transition-Ack frame from the second access point affiliated with the current access point MLD using the Fast Transition Resource Request Protocol, wherein the Fast-Transition-Ack frame is configured to determine the first information of the current link or recommend second information different from the first information, and is generated based on information from the target access point MLD; or
the target access point MLD transmits a Reassociation-Request frame via an affiliated first station to a first access point affiliated with the target access point MLD using the Fast Basic Service Set Transition Protocol in a reassociation process, wherein the Reassociation-Request frame carries first information of a current link; and the target access point MLD receives, via the affiliated first station, a Reassociation-Response frame from the first access point affiliated with the target access point MLD using the Fast Basic Service Set Transition Protocol, wherein the Reassociation-Response frame is configured to determine the first information of the current link, or recommend second information different from the first information.

In some embodiments, the station is a station MLD, the target access point is a target access point MLD, and the current access point is a current access point MLD; and n access points affiliated with the target access point MLD support pre-negotiation for the first information, and n is a positive integer;
the target access point MLD transmits an Authentication-Confirm frame via an affiliated first station to a first access point affiliated with the target access point MLD using the Fast Transition Resource Request Protocol, wherein the Authentication-Confirm frame carries first information of at least one link; and the target access point MLD receives, via the affiliated first station, an Authentication-Ack frame from the first access point affiliated with the target access point MLD using the Fast Transition Resource Request Protocol, wherein the Authentication-Ack frame is configured to determine the first information of the at least one link, or recommend second information different from the first information;
the target access point MLD transmits a Fast-Transition-Confirm frame via an affiliated first station to a second access point affiliated with the current access point MLD using the Fast Transition Resource Request Protocol, wherein the Fast-Transition-Confirm frame carries first information of at least one link and a multi-link address of the target access point MLD; and the target access point MLD receives, via the affiliated first station, a Fast-Transition-Ack frame from a second access point affiliated with the current access point MLD using the Fast Transition Resource Request Protocol, wherein the Fast-Transition-Ack frame is configured to determine the first information of the at least one link or recommend second information different from the first information, and is generated based on information from the target access point MLD; or
the target access point MLD transmits a Reassociation-Request frame via an affiliated first station to a first access point affiliated with the target access point MLD using the Fast Basic Service Set Transition Protocol in a reassociation process, wherein the Reassociation-Request frame carries first information of at least one link; and the target access point MLD receives, via the affiliated first station, a Reassociation-Response frame from the first access point affiliated with the target access point MLD using the Fast Basic Service Set Transition Protocol, wherein the Reassociation-Response frame is configured to determine the first information of the at least one link, or recommend second information different from the first information.

The at least one link is a link corresponding to at least one affiliated access point in the n affiliated access points.

In some embodiments, the first information is carried in an element corresponding to the first information in an RIC-Request field.

In some embodiments, the second information is carried in an element corresponding to the second information in an RIC-Response field.

In some embodiments, time information dependent on at least one of the TWT or the R-TWT is acquired based on a Timestamp field in at least one of a Beacon frame or a Probe Response frame of the target access point.

In some embodiments, the first information includes the TWT, and the TWT is used to request to set up at least one TWT and/or join at least one TWT that has been set up by the target access point.

In some embodiments, the first information includes the R-TWT, and the R-TWT is a broadcast TWT.

In some embodiments, a Traffic Information field in the R-TWT is configured based on a first TID-to-link mapping and a requirement of a latency-sensitive traffic, wherein the first TID-to-link mapping is advertised by an affiliated access point of the target access point MLD.

In some embodiments, a Traffic Information field in the R-TWT is configured based on a second TID-to-link mapping and a requirement of a latency-sensitive traffic, wherein the second TID-to-link mapping is to be negotiated by the station MLD with the target access point MLD.

In some embodiments, the first information includes: at least one TWT element, wherein each of the at least one TWT element indicates a first TWT or the R-TWT; and a link identifier bitmap, wherein the link identifier bitmap indicates a link of the first TWT or the R-TWT.

In some embodiments, each of the at least one TWT element carries the link identifier bitmap, a first TWT element in the at least one TWT element carries the link identifier bitmap, a last TWT element in the at least one TWT element carries the link identifier bitmap, or a part of TWT elements in the at least one TWT element carry the link identifier bitmap.

In some embodiments, in a case where the first TWT is a broadcast TWT and a first field outside a broadcast TWT parameter set takes a first value, each of the at least one TWT element carries the link identifier bitmap, the first TWT element in the at least one TWT element carries the link identifier bitmap, or the last TWT element in the at least one TWT element carries the link identifier bitmap, wherein the first field is a field indicating whether the link identifier bitmap is present.

In some embodiments, in a case where the first TWT is a broadcast TWT and a first field in a TWT parameter set of the part of TWT elements takes a first value, the part of TWT elements carry the link identifier bitmap, wherein the first field is a field indicating whether the link identifier bitmap is present.

In some embodiments, a link identifier in the first information is configured based on a link identifier in the target access point MLD.

In some embodiments, the link identifier in the target access point MLD is acquired based on at least one of a Beacon frame, or a Basic Multi-Link element or a Reduced Neighbor Report element in a Multi-Link Probe Response frame.

In some embodiments, the current link is indicated by at least one of: use of the current link by the current access point MLD for interaction in a case where the current access point MLD is interacted with the target access point MLD; or a link identifier bitmap in the first information, wherein the link identifier bitmap is used to indicate the current link.

The target access point MLD does not know an operating link of the first station. Only the current access point MLD knows the operating link of the first station. In this case, the "current link" is indicated implicitly or explicitly.

Implicit indication: in a case where the current access point MLD interacts with the target access point MLD, the current access point MLD selects the "current link" from the plurality of links and transmits the first information on the "current link" to indicate that the "current link" is a specific link.

Explicit indication: the first information transmitted by the current access point MLD carries the Link ID Bitmap field to indicate that the "current link" is a specific link.

For details of the method, reference may be made to the method performed by the station, which is not described any further.

FIG. 21 is a flowchart of a negotiation method for fast access point transition according to some embodiments of the present disclosure. The method includes the following processes.

**In** S2110, a station 2701 transmits a first frame to a target AP 203.

The first frame carries first information, including at least one of an Authentication-Confirm frame or a Reassociation-Request frame.

The first information includes at least one of a TWT, an R-TWT, or an TID-to-link mapping.

In a case where the station 2701 determines to transmit the data information to the target AP 203 in an over-the-air mode, the station 2701 transmits at least one of the Authentication-Confirm frame or the Reassociation-Request frame to the target AP 203.

The Authentication-Confirm frame is an authentication frame with a value of an Authentication Transaction Sequence Number field being 3.

**In** S2120, the target AP 203 transmits a second frame to the station 2701.

The second frame includes at least one of the Authentication-Ack frame or the Reassociation-Response frame.

In response to receiving the Authentication-Confirm frame from the station 2701, the target AP 203 feeds back the Authentication-Ack frame. The Authentication-Ack frame is an authentication frame with a value of an Authentication Transaction Sequence Number field being 4.

In response to receiving the Reassociation-Request frame from the station 2701, the target AP 203 feeds back the Reassociation-Response frame.

FIG. 22 is a flowchart of a negotiation method for fast access point transition according to some embodiments of the present disclosure. The method includes the following processes.

**In S2210,** a station 2701 transmits a first frame to a current AP 202.

The first frame carries the first information, including the Fast-Transition-Confirm frame.

The first information includes at least one of a TWT, an R-TWT, or an TID-to-link mapping.

In a case where the station 2701 determines to transmit the data information to a target AP 203 in an over-the-DS mode, the station 2701 transmits the Fast-Transition-Confirm frame to the current AP 202.

In a case where the target access point is a target access point MLD, the Fast-Transition-Confirm frame carries a multi-link address of the target access point MLD. That is, in the multi-link, the target AP in the drawing is replaced by the target MLD.

**In S2212,** the current AP 202 transmits information carried in the first frame to the target AP 203.

Upon receiving the Fast-Transition-Confirm frame from the station 2701, the current AP 202 transmits information carried in the Fast-Transition-Confirm frame to the target AP 203.

**In S2220,** the target AP 203 transmits information for generating a second frame to the current AP 202.

The second frame includes the Fast-Transition-Ack frame.

In response to receiving the information carried in the Fast-Transition-Ack frame, the target AP 203 transmits the information for generating the Fast-Transition-Ack frame to the current AP 202.

**In S2222,** the current AP 202 transmits the second frame to the station 2701.

Upon receiving the information from the target AP 203 for generating the Fast-Transition-Ack frame, the current AP 202 generates the Fast-Transition-Ack frame and transmits the Fast-Transition-Ack frame to the station 2701.

FIG. 23 is a flowchart of a negotiation method for fast access point transition according to some embodiments of the present disclosure. The method is performed by a current access point. The method includes the following process.

**In S2310,** information of pre-negotiation for first information is forwarded between a station and a target access point using at least one of Fast Basic Service Set Transition Protocol or Fast Transition Resource Request Protocol, wherein the first information includes at least one of a TWT, an R-TWT, or a TID-to-link mapping.

In some embodiments, the current access point receives a first frame from the station using at least one of the Fast Basic Service Set Transition Protocol or the Fast Transition Resource Request Protocol, and forwards information carried in the first frame to the target access point. The first frame carries the first information.

In some embodiments, the first frame includes at least one of an Authentication-Confirm frame, a Fast-Transition-Confirm frame, or a Reassociation-Request frame.

In some embodiments, the current access point receives information for generating a second frame from the target access point using at least one of the Fast Basic Service Set Transition Protocol or the Fast Transition Resource Request Protocol, and transmits the second frame to the station. The second frame is configured to confirm the first information, or recommend second information different from the first information.

In some embodiments, the second frame includes at least one of an Authentication-Ack frame, a Fast-Transition-Ack frame, or a Reassociation-Response frame.

In some embodiments, the current access point receives a Fast-Transition-Confirm frame from the station using the Fast Transition Resource Request Protocol, and forwards information carried in the Fast-Transition-Confirm frame to the target access point.

The Fast-Transition-Confirm frame carries the first information and an address of the target access point.

In some embodiments, the current access point receives information for generating a Fast-Transition-Ack frame from the target access point using the Fast Transition Resource Request Protocol, and forwards the Fast-Transition-Ack frame to the station.

The Fast-Transition-Ack frame is configured to determine the first information or recommend second information different from the first information, and is generated based on the information from the target access point.

In some embodiments, the station is a station MLD, the target access point is a target access point MLD, and the current access point is a current access point MLD;
the current access point receives, via an affiliated second access point, a Fast-Transition-Confirm frame from a first station affiliated with the station MLD using the Fast Transition Resource Request Protocol, and forwards information carried in the Fast-Transition-Confirm frame to a first access point affiliated with the target access point MLD.

The Fast-Transition-Confirm frame carries first information of a current link and a multi-link address of the target access point MLD.

In some embodiments, the station is a station MLD, the target access point is a target access point MLD, and the current access point is a current access point MLD;
the current access point receives, via an affiliated second access point, information for generating a Fast-Transition-Ack frame from a first access point affiliated with the target access point MLD using the Fast Transition Resource Request Protocol, and forwards the Fast-Transition-Ack frame to a first station affiliated with the station MLD.

The Fast-Transition-Ack frame is configured to determine first information of a current link or recommend second information different from the first information, and is generated based on the information from the target access point MLD.

In some embodiments, the station is a station MLD, the target access point is a target access point MLD, and the current access point is a current access point MLD, wherein n access points affiliated with the target access point MLD support pre-negotiation for the first information, n being a positive integer;
the current access point receives, via an affiliated second access point, a Fast-Transition-Confirm frame from a first station affiliated with the station MLD using the Fast Transition Resource Request Protocol, and forwards information carried in the Fast-Transition-Confirm frame to a first access point affiliated with the target access point MLD.

The Fast-Transition-Confirm frame carries first information of at least one link and a multi-link address of the target access point MLD. The at least one link is a link corresponding to at least one affiliated access point in the n affiliated access points.

In some embodiments, the station is a station MLD, the target access point is a target access point MLD, and the current access point is a current access point MLD, wherein n access points affiliated with the target access point MLD support pre-negotiation for the first information, n being a positive integer;
the current access point receives, via an affiliated second access point, information for generating a Fast-Transition-Ack frame from a first access point affiliated with the target access point MLD using the Fast Transition Resource Request Protocol, and forwards the Fast-Transition-Ack frame to a first station affiliated with the station MLD.

The Fast-Transition-Ack frame is configured to determine first information of at least one link or recommend second information different from the first information, and is generated based on information from the target access point MLD. The at least one link is a link corresponding to at least one affiliated access point in the n affiliated access points.

For details of the method, reference may be made to FIG. 21 and FIG. 22, which is not described any further.

In some embodiments, the first information is carried in an element corresponding to the first information in an RIC-Request field.

In some embodiments, the second information is carried in an element corresponding to the second information in an RIC-Response field.

In some embodiments, time information dependent on at least one of the TWT or the R-TWT is acquired based on a Timestamp field in at least one of a Beacon frame or a Probe Response frame of the target access point.

In some embodiments, the first information includes the TWT, and the TWT is used to request to set up at least one TWT and/or join at least one TWT that has been set up by the target access point.

In some embodiments, the first information includes the R-TWT, and the R-TWT is a broadcast TWT.

In some embodiments, a Traffic Information field in the R-TWT is configured based on a first TID-to-link mapping and a requirement of a latency-sensitive traffic, wherein the first TID-to-link mapping is advertised by an affiliated access point of the target access point MLD.

In some embodiments, a Traffic Information field in the R-TWT is configured based on a second TID-to-link mapping and a requirement of a latency-sensitive traffic, wherein the second TID-to-link mapping is to be negotiated by the station MLD with the target access point MLD.

In some embodiments, the first information includes: at least one TWT element, wherein each of the at least one TWT element indicates a first TWT or the R-TWT; and a link identifier bitmap, wherein the link identifier bitmap indicates a link of the first TWT or the R-TWT.

In some embodiments, each of the at least one TWT element carries the link identifier bitmap, a first TWT element in the at least one TWT element carries the link identifier bitmap, a last TWT element in the at least one TWT element carries the link identifier bitmap, or a part of TWT elements in the at least one TWT element carry the link identifier bitmap.

In some embodiments, in a case where the first TWT is a broadcast TWT and a first field outside a broadcast TWT parameter set takes a first value, each of the at least one TWT element carries the link identifier bitmap, the first TWT element in the at least one TWT element carries the link identifier bitmap, or the last TWT element in the at least one TWT element carries the link identifier bitmap, wherein the first field is a field indicating whether the link identifier bitmap is present.

In some embodiments, in a case where the first TWT is a broadcast TWT and a first field in a TWT parameter set of the part of TWT elements takes a first value, the part of TWT elements carry the link identifier bitmap, wherein the first field is a field indicating whether the link identifier bitmap is present.

In some embodiments, a link identifier in the first information is set based on a link identifier in the target access point MLD.

In some embodiments, the link identifier in the target access point MLD is acquired based on at least one of a beacon frame, or a basic multi-link element or a reduced neighbor report element in a multi-link probe response frame.

In some embodiments, the current link is indicated by at least one of: use of the current link by the current access point MLD for interaction in a case where the current access point MLD is interacted with the target access point MLD; or a link identifier bitmap in the first information, wherein the link identifier bitmap is used to indicate the current link.

The target access point MLD does not know an operating link of the first station. Only the current access point MLD knows the operating link of the first station. In this case, the "current link" is indicated implicitly or explicitly.

Implicit indication: in a case where the current access point MLD interacts with the target access point MLD, the current access point MLD selects the "current link" from the plurality of links and transmits the first information on the "current link" to indicate that the "current link" is a specific link.

Explicit indication: the first information transmitted by the current access point MLD carries the Link ID Bitmap field to indicate that the "current link" is a specific link.

For details of the method, reference may be made to the method performed by the station, which is not described any further.

FIG. 24 is a block diagram of a negotiation apparatus based on a fast transition access point according to some embodiments of the present disclosure. The apparatus includes a first transmitting module 2410. The function of the first transmitting module 2410 is achieved by a transceiver in a station device.

The first transmitting module 2410 is configured to negotiate first information with a target access point in advance based on at least one of a Fast Basic Service Set Transition Protocol or a Fast Transition Resource Request Protocol, wherein the first information includes at least one of a TWT, an R-TWT, or a TID-to-link mapping.

In some embodiments, the first transmitting module 2410 is configured to transmit a first frame to the target access point or a current access point based on at least one of the Fast Basic Service Set Transition Protocol or the Fast Transition Resource Request Protocol, wherein the first frame carries the first information.

In some embodiments, the first frame includes at least one of an authentication-confirm frame, a fast-transition-confirm frame, or a reassociation-request frame.

In some embodiments, the first transmitting module 2410 is configured to receive a second frame from the target access point or the current access point based on at least one of the Fast Basic Service Set Transition Protocol or the Fast Transition Resource Request Protocol, wherein the second frame is used to determine the first information, or recommend second information different from the first information.

In some embodiments, the second frame includes at least one of an authentication-ack frame, a fast-transition-ack frame, or a reassociation-response frame.

In some embodiments, the first transmitting module 2410 is configured to: transmit an authentication-confirm frame to the target access point based on the Fast Transition Resource Request Protocol, wherein the authentication-confirm frame carries the first information;
transmit a fast-transition-confirm frame to the current access point based on the Fast Transition Resource Request Protocol, wherein the fast-transition-confirm frame carries the first information and an address of the target access point; or
transmit a reassociation-request frame to the target access point based on the Fast Basic Service Set Transition Protocol in a reassociation process, wherein the reassociation-request frame carries the first information.
n some embodiments, the first transmitting module 2410 is configured to: receive an authentication-ack frame from the target access point based on the Fast Transition Resource Request Protocol, wherein the authentication-ack frame is used to determine the first information, or recommend second information different from the first information;
receive a fast-transition-ack frame from the current access point based on the Fast Transition Resource Request Protocol, wherein the fast-transition-ack frame is used to determine the first information or recommend second information different from the first information, and is generated based on information from the target access point; or
receive a reassociation-response frame from the target access point based on the Fast Basic Service Set Transition Protocol in a reassociation process, wherein the reassociation-response frame is used to determine the first information, or recommend second information different from the first information.

In some embodiments, the station is a station MLD, the target access point is a target access point MLD, and the current access point is a current access point MLD; and
the first transmitting module 2410 is configured to: transmit an authentication-confirm frame via an affiliated first station to a first access point affiliated with the target access point MLD based on the Fast Transition Resource Request Protocol, wherein the authentication-confirm frame carries first information of a current link;
transmit a fast-transition-confirm frame via an affiliated first station to a second access point affiliated with the current access point MLD based on the Fast Transition Resource Request Protocol, wherein the fast-transition-confirm frame carries first information of a current link and a multi-link address of the target access point MLD; or
transmit a reassociation-request frame via an affiliated first station to a first access point affiliated with the target access point MLD based on the Fast Basic Service Set Transition Protocol in a reassociation process, wherein the reassociation-request frame carries first information of a current link.

In some embodiments, the station is a station MLD, the target access point is a target access point MLD, and the current access point is a current access point MLD; and
the first transmitting module 2410 is configured to: receive, by an affiliated first station, an authentication-ack frame from a first access point affiliated with the target access point MLD based on the Fast Transition Resource Request Protocol, wherein the authentication-ack frame is used to determine first information of a current link, or recommend second information different from the first information;
receive, by an affiliated first station, a fast-transition-ack frame from a second access point affiliated with the current access point MLD based on the Fast Transition Resource Request Protocol, wherein the fast-transition-ack frame is used to determine first information of a current link or recommend second information different from the first information, and is generated based on information from the target access point MLD; or
receive, by an affiliated first station, a reassociation-response frame from a first access point affiliated with the target access point MLD based on the Fast Basic Service Set Transition Protocol, wherein the reassociation-response frame is used to determine first information of a current link, or recommend second information different from the first information.

In some embodiments, the station is a station MLD, the target access point is a target access point MLD, and the current access point is a current access point MLD, wherein n access points affiliated with the target access point MLD support advanced negotiation for the first information, n being a positive integer; and
the first transmitting module 2410 is configured to: transmit an authentication-confirm frame via an affiliated first station to a first access point affiliated with the target access point MLD based on the Fast Transition Resource Request Protocol, wherein the authentication-confirm frame carries first information of at least one link;
transmit a fast-transition-confirm frame via an affiliated first station to a second access point affiliated with the current access point MLD based on the Fast Transition Resource Request Protocol, wherein the fast-transition-confirm frame carries first information of at least one link and a multi-link address of the target access point MLD; or
transmit a reassociation-request frame via an affiliated first station to a first access point affiliated with the target access point MLD based on the Fast Basic Service Set Transition Protocol in a reassociation process, wherein the reassociation-request frame carries first information of at least one link,
wherein the at least one link is a link corresponding to at least one affiliated access point in the n affiliated access points.

In some embodiments, the station is a station MLD, the target access point is a target access point MLD, and the current access point is a current access point MLD, wherein n access points affiliated with the target access point MLD support advanced negotiation for the first information, n being a positive integer; and
the first transmitting module 2410 is configured to: receive, by an affiliated first station, an authentication-ack frame from a first access point affiliated with the target access point MLD based on the Fast Transition Resource Request Protocol, wherein the authentication-ack frame is used to determine first information of at least one link, or recommend second information different from the first information;
cause an affiliated first station to receive a Fast-Transition-Ack frame from a second access point affiliated with the current access point MLD using the Fast Transition Resource Request Protocol, wherein the Fast-Transition-Ack frame is configured to determine first information of at least one link or recommend second information different from the first information, and is generated based on information from the target access point MLD; or
cause an affiliated first station to receive a Reassociation-Response frame from a first access point affiliated with the target access point MLD using the Fast Basic Service Set Transition Protocol, wherein the Reassociation-Response frame is configured to determine first information of at least one link, or recommend second information different from the first information,
wherein the at least one link is a link corresponding to at least one affiliated access point in the n affiliated access points.

In some embodiments, the first information is carried in an element corresponding to the first information in an RIC-Request field.

In some embodiments, the second information is carried in an element corresponding to the second information in an RIC-Response field.

In some embodiments, time information dependent on at least one of the TWT or the R-TWT is acquired based on a Timestamp field in at least one of a Beacon frame or a Probe Response frame of the target access point.

In some embodiments, the first information includes the TWT, and the TWT is used to request to set up at least one TWT and/or join at least one TWT that has been set up by the target access point.

In some embodiments, the first information includes the R-TWT, and the R-TWT is a broadcast TWT.

In some embodiments, a Traffic Information field in the R-TWT is configured based on a first TID-to-link mapping and a requirement of a latency-sensitive traffic, wherein the first TID-to-link mapping is advertised by an affiliated access point of the target access point MLD.

In some embodiments, a Traffic Information field in the R-TWT is configured based on a second TID-to-link mapping and a requirement of a latency-sensitive traffic, wherein the second TID-to-link mapping is to be negotiated by the station MLD with the target access point MLD.

In some embodiments, the first information includes: at least one TWT element, wherein each of the at least one TWT element indicates a first TWT or the R-TWT; and a link identifier bitmap, wherein the link identifier bitmap indicates a link of the first TWT or the R-TWT.

In some embodiments, each of the at least one TWT element carries the link identifier bitmap, a first TWT element in the at least one TWT element carries the link identifier bitmap, a last TWT element in the at least one TWT element carries the link identifier bitmap, or a part of TWT elements in the at least one TWT element carry the link identifier bitmap.

In some embodiments, in a case where the first TWT is a broadcast TWT and a first field outside a broadcast TWT parameter set takes a first value, each of the at least one TWT element carries the link identifier bitmap, the first TWT element in the at least one TWT element carries the link identifier bitmap, or the last TWT element in the at least one TWT element carries the link identifier bitmap, wherein the first field is a field indicating whether the link identifier bitmap is present.

In some embodiments, in a case where the first TWT is a broadcast TWT and a first field in a TWT parameter set of a part of TWT elements takes a first value, the part of TWT elements carry the link identifier bitmap, wherein the first field is a field indicating whether the link identifier bitmap is present.

In some embodiments, a link identifier in the first information is configured based on a link identifier in the target access point MLD.

In some embodiments, the link identifier in the target access point MLD is acquired based on at least one of a Beacon frame, or a Basic Multi-Link element or a Reduced Neighbor Report element in a multi-link Probe Response frame.

In some embodiments, the current link is indicated by at least one of: use of the current link by the current access point MLD for interaction in a case where the current access point MLD is interacted with the target access point MLD; or a link identifier bitmap in the first information, wherein the link identifier bitmap is used to indicate the current link.

FIG. 25 is a block diagram of a negotiation apparatus for fast access point transition according to some embodiments of the present disclosure. The apparatus includes a second transmitting module 2510. The function of the second transmitting module 2510 is achieved by a transceiver in a station device.

The second transmitting module 2510 is configured to pre-negotiate first information with a station using at least one of Fast Basic Service Set Transition Protocol or Fast Transition Resource Request Protocol, wherein the first information includes at least one of a TWT, an R-TWT, or a TID-to-link mapping.

In some embodiments, the second transmitting module 2510 is configured to receive a first frame from the station or a current access point using at least one of the Fast Basic Service Set Transition Protocol or the Fast Transition Resource Request Protocol, wherein the first frame carries the first information.

In some embodiments, the first frame includes at least one of an Authentication-Confirm frame, a Fast-Transition-Confirm frame, or a Reassociation-Request frame.

In some embodiments, the second transmitting module 2510 is configured to transmit a second frame to the station or the current access point using at least one of the Fast Basic Service Set Transition Protocol or the Fast Transition Resource Request Protocol, wherein the second frame is configured to confirm the first information, or recommend second information different from the first information.

In some embodiments, the second frame includes at least one of an Authentication-Ack frame, a Fast-Transition-Ack frame, or a Reassociation-Response frame.

In some embodiments, the second transmitting module 2510 is configured to: receive an Authentication-Confirm frame from the station using the Fast Transition Resource Request Protocol, wherein the Authentication-Confirm frame carries the first information;
receive information carried in a Fast-Transition-Confirm frame forwarded by the current access point using the Fast Transition Resource Request Protocol, wherein the Fast-Transition-Confirm frame carries the first information and an address of the target access point; or
receive a Reassociation-Request frame from the station using the Fast Basic Service Set Transition Protocol in a reassociation process, wherein the Reassociation-Request frame carries the first information.

In some embodiments, the second transmitting module 2510 is configured to: transmit an Authentication-Ack frame to the station using the Fast Transition Resource Request Protocol, wherein the Authentication-Ack frame is configured to determine the first information, or recommend second information different from the first information;
transmit information for generating a Fast-Transition-Ack frame to the current access point using the Fast Transition Resource Request Protocol, wherein the Fast-Transition-Ack frame is configured to determine the first information, or recommend second information different from the first information; or
transmit a Reassociation-Response frame to the station using the Fast Basic Service Set Transition Protocol in a reassociation process, wherein the Reassociation-Response frame is configured to determine the first information, or recommend second information different from the first information.

In some embodiments, the station is a station MLD, the target access point is a target access point MLD, and the current access point is a current access point MLD; and
the second transmitting module 2510 is configured to: cause an affiliated first access point to receive an Authentication-Confirm frame via a first station affiliated with the station MLD using the Fast Transition Resource Request Protocol, wherein the Authentication-Confirm frame carries first information of a current link;
cause an affiliated first access point to receive information carried in a Fast-Transition-Confirm frame forwarded by a second access point affiliated with the current access point MLD using the Fast Transition Resource Request Protocol, wherein the Fast-Transition-Confirm frame carries first information of a current link and a multi-link address of the target access point MLD; or
cause an affiliated first access point to receive a Reassociation-Request frame from a first station affiliated with the station MLD using the Fast Basic Service Set Transition Protocol in a reassociation process, wherein the Reassociation-Request frame carries first information of a current link.

In some embodiments, the station is a station MLD, the target access point is a target access point MLD, and the current access point is a current access point MLD; and
the second transmitting module 2510 is configured to: transmit an Authentication-Ack frame via an affiliated first access point to a first station affiliated with the station MLD using the Fast Transition Resource Request Protocol, wherein the Authentication-Ack frame is configured to determine first information of a current link, or recommend second information different from the first information;
transmit information for generating a Fast-Transition-Ack frame via an affiliated first access point to a second access point affiliated with the current access point MLD using the Fast Transition Resource Request Protocol, wherein the Fast-Transition-Ack frame is configured to determine first information of a current link or recommend second information different from the first information; or
transmit a Reassociation-Response frame via an affiliated first access point to a first station affiliated with the station MLD using the Fast Basic Service Set Transition Protocol, wherein the Reassociation-Response frame is configured to determine first information of a current link, or recommend second information different from the first information.

In some embodiments, the station is a station MLD, the target access point is a target access point MLD, and the current access point is a current access point MLD, wherein n access points affiliated with the target access point MLD support pre-negotiation for the first information, n being a positive integer; and
the second transmitting module 2510 is configured to: cause an affiliated first access point to receive an Authentication-Confirm frame from a first station affiliated with the station MLD using the Fast Transition Resource Request Protocol, wherein the Authentication-Confirm frame carries first information of at least one link;
cause an affiliated first access point to receive information carried in a Fast-Transition-Confirm frame forwarded by a second access point affiliated with the current access point MLD using the Fast Transition Resource Request Protocol, wherein the Fast-Transition-Confirm frame carries first information of at least one link and a multi-link address of the target access point MLD; or
cause an affiliated first access point to receive a Reassociation-Request frame from a first station affiliated with the station MLD using the Fast Basic Service Set Transition Protocol in a reassociation process, wherein the Reassociation-Request frame carries first information of at least one link,
wherein the at least one link is a link corresponding to at least one affiliated access point in the n affiliated access points.

In some embodiments, the station is a station MLD, the target access point is a target access point MLD, and the current access point is a current access point MLD, wherein n access points affiliated with the target access point MLD support pre-negotiation for the first information, n being a positive integer; and
the second transmitting module 2510 is configured to: transmit an Authentication-Ack frame via an affiliated first access point to a first station affiliated with the station MLD using the Fast Transition Resource Request Protocol, wherein the Authentication-Ack frame is configured to determine first information of at least one link, or recommend second information different from the first information;
transmit information for generating a Fast-Transition-Ack frame from an affiliated first access point to a second access point affiliated with the current access point MLD using the Fast Transition Resource Request Protocol, wherein the Fast-Transition-Ack frame is configured to determine first information of at least one link or recommend second information different from the first information; or
transmit a Reassociation-Response frame from an affiliated first access point to a first station affiliated with the station MLD using the Fast Basic Service Set Transition Protocol, wherein the Reassociation-Response frame is configured to determine first information of at least one link, or recommend second information different from the first information,
wherein the at least one link is a link corresponding to at least one affiliated access point in the n affiliated access points.

In some embodiments, the first information is carried in an element corresponding to the first information in an RIC-Request field.

In some embodiments, the second information is carried in an element corresponding to the second information in an RIC-Response field.

In some embodiments, time information dependent on at least one of the TWT or the R-TWT is acquired based on a Timestamp field in at least one of a Beacon frame or a Probe Response frame of the target access point.

In some embodiments, the first information includes the TWT, and the TWT is used to request to set up at least one TWT and/or join at least one TWT that has been set up by the target access point.

In some embodiments, the first information includes the R-TWT, and the R-TWT is a broadcast TWT.

In some embodiments, a Traffic Information field in the R-TWT is configured based on a first TID-to-link mapping and a requirement of a latency-sensitive traffic, wherein the first TID-to-link mapping is advertised by an affiliated access point of the target access point MLD.

In some embodiments, a Traffic Information field in the R-TWT is configured based on a second TID-to-link mapping and a requirement of a latency-sensitive traffic, wherein the second TID-to-link mapping is to be negotiated by the station MLD with the target access point MLD.

In some embodiments, the first information includes: at least one TWT element, wherein each of the at least one TWT element indicates a first TWT or the R-TWT; and a link identifier bitmap, wherein the link identifier bitmap indicates a link of the first TWT or the R-TWT.

In some embodiments, each of the at least one TWT element carries the link identifier bitmap, a first TWT element in the at least one TWT element carries the link identifier bitmap, a last TWT element in the at least one TWT element carries the link identifier bitmap, or a part of TWT elements in the at least one TWT element carry the link identifier bitmap.

In some embodiments, in a case where the first TWT is a broadcast TWT and a first field outside a broadcast TWT parameter set takes a first value, each of the at least one TWT element carries the link identifier bitmap, the first TWT element in the at least one TWT element carries the link identifier bitmap, or the last TWT element in the at least one TWT element carries the link identifier bitmap, wherein the first field is a field indicating whether the link identifier bitmap is present.

In some embodiments, in a case where the first TWT is a broadcast TWT and a first field in a TWT parameter set of the part of TWT elements takes a first value, the part of TWT elements carry the link identifier bitmap, wherein the first field is a field indicating whether the link identifier bitmap is present.

In some embodiments, a link identifier in the first information is configured based on a link identifier in the target access point MLD.

In some embodiments, the link identifier in the target access point MLD is acquired based on at least one of a Beacon frame, or a basic multi-link element or a Reduced Neighbor Report element in a multi-link Probe Response frame.

In some embodiments, the current link is indicated by at least one of: use of the current link by the current access point MLD for interaction in a case where the current access point MLD is interacted with the target access point MLD; or a link identifier bitmap in the first information, wherein the link identifier bitmap is used to indicate the current link.

FIG. 26 is a block diagram of a negotiation apparatus for fast access point transition according to some embodiments of the present disclosure. The apparatus includes a third transmitting module 2610. The function of the second transmitting module 2610 is achieved by a transceiver in a station device.

The third transmitting module 2610 is configured to forward information of pre-negotiation for first information between a station and a target access point using at least one of Fast Basic Service Set Transition Protocol or Fast Transition Resource Request Protocol, wherein the first information includes at least one of a TWT, an R-TWT, or a TID-to-link mapping.

In some embodiments, the third transmitting module 2610 is configured to receive a first frame from the station using at least one of the Fast Basic Service Set Transition Protocol or the Fast Transition Resource Request Protocol, and forward information carried in the first frame to the target access point, wherein the first frame carries the first information.

In some embodiments, the first frame includes at least one of an Authentication-Confirm frame, a Fast-Transition-Confirm frame, or a Reassociation-Request frame.

In some embodiments, the third transmitting module 2610 is configured to receive information for generating a second frame from the target access point using at least one of the Fast Basic Service Set Transition Protocol or the Fast Transition Resource Request Protocol, and transmit the second frame to the station, wherein the second frame is configured to confirm the first information, or recommend second information different from the first information.

In some embodiments, the second frame includes at least one of an Authentication-Ack frame, a Fast-Transition-Ack frame, or a Reassociation-Response frame.

In some embodiments, the third transmitting module 2610 is configured to receive a Fast-Transition-Confirm frame from the station using the Fast Transition Resource Request Protocol, and forward information carried in the Fast-Transition-Confirm frame to the target access point, wherein the Fast-Transition-Confirm frame carries the first information and an address of the target access point.

In some embodiments, the third transmitting module 2610 is configured to receive information for generating a Fast-Transition-Ack frame from the target access point using the Fast Transition Resource Request Protocol, and forward the Fast-Transition-Ack frame to the station, wherein the Fast-Transition-Ack frame is configured to determine the first information or recommend second information different from the first information, and is generated based on the information from the target access point.

In some embodiments, the station is a station MLD, the target access point is a target access point MLD, and the current access point is a current access point MLD; and

the third transmitting module 2610 is configured to cause an affiliated second access point to receive a Fast-Transition-Confirm frame from a first station affiliated with the station MLD using the Fast Transition Resource Request Protocol, and forward information carried in the Fast-Transition-Confirm frame to a first access point affiliated with the target access point MLD, wherein the Fast-Transition-Confirm frame carries first information of a current link and a multi-link address of the target access point MLD.

In some embodiments, the station is a station MLD, the target access point is a target access point MLD, and the current access point is a current access point MLD; and receiving the information for generating the second frame from the target access point using at least one of the Fast Basic Service Set Transition Protocol or the Fast Transition Resource Request Protocol, and

the third transmitting module 2610 is configured to cause an affiliated second access point to receive information for generating a Fast-Transition-Ack frame from a first access point affiliated with the target access point MLD using the Fast Transition Resource Request Protocol, and forward the Fast-Transition-Ack frame to a first station affiliated with the station MLD, wherein the Fast-Transition-Ack frame is configured to determine first information of a current link or recommend second information different from the first information, and is generated based on the information from the target access point MLD.

In some embodiments, the station is a station MLD, the target access point is a target access point MLD, and the current access point is a current access point MLD, wherein n access points affiliated with the target access point MLD support pre-negotiation for the first information, n being a positive integer; and
the third transmitting module 2610 is configured to cause an affiliated second access point to receive a Fast-Transition-Confirm frame from a first station affiliated with the station MLD using the Fast Transition Resource Request Protocol, and forward information carried in the Fast-Transition-Confirm frame to a first access point affiliated with the target access point MLD, wherein the Fast-Transition-Confirm frame carries first information of at least one link and a multi-link address of the target access point MLD, wherein the at least one link is a link corresponding to at least one affiliated access point in the n affiliated access points.

In some embodiments, the station is a station MLD, the target access point is a target access point MLD, and the current access point is a current access point MLD, wherein n access points affiliated with the target access point MLD support pre-negotiation for the first information, n being a positive integer; and
the third transmitting module 2610 is configured to cause an affiliated second access point to receive information for generating a Fast-Transition-Ack frame from a first access point affiliated with the target access point MLD using the Fast Transition Resource Request Protocol, and forward the Fast-Transition-Ack frame to a first station affiliated with the station MLD, wherein the Fast-Transition-Ack frame is configured to determine first information of at least one link or recommend second information different from the first information, and is generated based on information from the target access point MLD, wherein the at least one link is a link corresponding to at least one affiliated access point in the n affiliated access points.

In some embodiments, the first information is carried in an element corresponding to the first information in an RIC-Request field.

In some embodiments, the second information is carried in an element corresponding to the second information in an RIC-Response field.

In some embodiments, time information dependent on at least one of the TWT or the R-TWT is acquired a Timestamp field in at least one of a Beacon frame or a Probe Response frame of the target access point.

In some embodiments, the first information includes the TWT, and the TWT is used to request to set up at least one TWT and/or join at least one TWT that has been set up by the target access point.

In some embodiments, the first information includes the R-TWT, and the R-TWT is a broadcast TWT.

In some embodiments, a Traffic Information field in the R-TWT is configured based on a first TID-to-link mapping and a requirement of a latency-sensitive traffic, wherein the first TID-to-link mapping is advertised by an affiliated access point of the target access point MLD.

In some embodiments, a Traffic Information field in the R-TWT is configured based on a second TID-to-link mapping and a requirement of a latency-sensitive traffic, wherein the second TID-to-link mapping is to be negotiated by the target access point MLD with the station MLD.

In some embodiments, the first information includes: at least one TWT element, wherein each of the at least one TWT element indicates a first TWT or the R-TWT; and a link identifier bitmap, wherein the link identifier bitmap indicates a link of the first TWT or the R-TWT.

In some embodiments, each of the at least one TWT element carries the link identifier bitmap, a first TWT element in the at least one TWT element carries the link identifier bitmap, a last TWT element in the at least one TWT element carries the link identifier bitmap, or a part of TWT elements in the at least one TWT element carry the link identifier bitmap.

In some embodiments, in a case where the first TWT is a broadcast TWT and a first field outside a broadcast TWT parameter set takes a first value, each of the at least one TWT element carries the link identifier bitmap, the first TWT element in the at least one TWT element carries the link identifier bitmap, or the last TWT element in the at least one TWT element carries the link identifier bitmap, wherein the first field is a field indicating whether the link identifier bitmap is present.

In some embodiments, in a case where the first TWT is a broadcast TWT and a first field in a TWT parameter set of the part of TWT elements takes a first value, the part of TWT elements carry the link identifier bitmap, wherein the first field is a field indicating whether the link identifier bitmap is present.

In some embodiments, a link identifier in the first information is configured based on a link identifier in the target access point MLD.

In some embodiments, the link identifier in the target access point MLD is acquired based on at least one of a Beacon frame, or a Basic Multi-Link element or a Reduced Neighbor Report element in a Multi-Link Probe Response frame.

In some embodiments, the current link is indicated by at least one of: use of the current link by the current access point MLD for interaction in a case where the current access point MLD is interacted with the target access point MLD; or a link identifier bitmap in the first information, wherein the link identifier bitmap is used to indicate the current link.

FIG. 27 is a schematic structural diagram of a station device or an access point device 2700 according to some embodiments of the present disclosure. The station device or the access point device 2700 includes: a processor 2701, a receiver 2702, a transmitter 2703, a memory 2704, and a bus 2705.

The processor 2701 includes one or more processing cores, and achieves various functional applications and information processing by running software programs and modules.

The receiver 2702 and the transmitter 2703 are practiced as a communication assembly. The communication assembly is a communication chip, and is also referred to as a transceiver. In some embodiments, the transceiver is configured to achieve the function and processes of the first transmitting module 2410, the second transmitting module 2420, and the third transmitting module 2610.

The memory 2704 is connected to the processor 2701 via the bus 2705.

The memory 2704 is configured to store one or more instructions, and the processor 2701, when loading and executing the one or more instructions, is caused to perform various processes in the above method embodiments.

In addition, the memory 2704 is practiced by any type of volatile or non-volatile storage device or combinations thereof. The volatile or non-volatile storage device includes, but is not limited to, a disk or optical disc, an electrically erasable programmable read-only memory (EEPROM), an erasable programmable read-only memory (EPROM), a persistent random-access memory (SRAM), a read-only memory (ROM), a magnetic memory, a flash memory, or a programmable read-only memory (PROM).

In some embodiments, the receiver 2702 receives signals/data independently, the processor 2701 controls the receiver 2702 to receive signals/data, the processor 2701 requests the receiver 2702 to receive signals/data, or, the processor 2701 cooperates with the receiver 2702 to receive signals/data.

In some embodiments, the transmitter 2703 transmits signals/data independently, the processor 2701 controls the transmitter 2703 to transmit signals/data, the processor 2701 requests the transmitter 2703 to transmit signals/data, or, the processor 2701 cooperates with the transmitter 2703 to transmit signals/data.

Some embodiments of the present disclosure further provide a computer-readable storage medium storing one or more instructions, one or more programs, a code set, or an instruction set, wherein the one or more instructions, the one or more programs, the code set, or the instruction set, when loaded and run by a processor, cause the processor to perform the negotiation method for fast access point transition in the above method embodiments.

Some embodiments of the present disclosure further provide a computer program product or a computer program. The computer program product or the computer program, when running on a processor, causes the station device or the access point device to perform the negotiation method for fast access point transition in the above method embodiments.

It should be understood by those skilled in the art that all or part of processes in the embodiments are practiced by the hardware, or related hardware instructed by the programs. The programs are stored in a computer-readable storage medium. The storage medium is a ROM, a disk, an optical disc, or the like.

Described above are merely exemplary embodiments of the present disclosure, and are not intended to limit the present disclosure. Any modifications, equivalent replacements, improvements and the like made within the spirit and principles of the present disclosure should be encompassed within the scope of protection of the present disclosure.

## Claims

1. A negotiation method for fast access point transition, performed by a station, the method comprising:
pre-negotiating first information with a target access point using at least one of Fast Basic Service Set Transition Protocol or Fast Transition Resource Request Protocol, wherein the first information comprises at least one of a target wake time (TWT), a restricted TWT (R-TWT), or a traffic identifier-to-link mapping.

2. The method according to claim 1, wherein pre-negotiating the first information with the target access point using at least one of the Fast Basic Service Set Transition Protocol or the Fast Transition Resource Request Protocol comprises:
transmitting a first frame to the target access point or a current access point using at least one of the Fast Basic Service Set Transition Protocol or the Fast Transition Resource Request Protocol, wherein the first frame carries the first information.

3. The method according to claim 2, wherein the first frame comprises at least one of an Authentication-Confirm frame, a Fast-Transition-Confirm frame, or a Reassociation-Request frame.

4. The method according to claim 2, further comprising:
receiving a second frame from the target access point or the current access point using at least one of the Fast Basic Service Set Transition Protocol or the Fast Transition Resource Request Protocol, wherein the second frame is configured to confirm the first information, or recommend second information different from the first information.

5. The method according to claim 4, wherein the second frame comprises at least one of an Authentication-Ack frame, a Fast-Transition-Ack frame, or a Reassociation-Response frame.

6. The method according to any one of claims 2 to 5, wherein transmitting the first frame to the target access point or the current access point using at least one of the Fast Basic Service Set Transition Protocol or the Fast Transition Resource Request Protocol, wherein the first frame carries the first information, comprises:
transmitting an Authentication-Confirm frame to the target access point using the Fast Transition Resource Request Protocol, wherein the Authentication-Confirm frame carries the first information;
transmitting a Fast-Transition-Confirm frame to the current access point using the Fast Transition Resource Request Protocol, wherein the Fast-Transition-Confirm frame carries the first information and an address of the target access point; or
transmitting a Reassociation-Request frame to the target access point using the Fast Basic Service Set Transition Protocol in a reassociation process, wherein the Reassociation-Request frame carries the first information.

7. The method according to claim 4 or 5, wherein receiving the second frame from the target access point or the current access point using at least one of the Fast Basic Service Set Transition Protocol or the Fast Transition Resource Request Protocol comprises:
receiving an Authentication-Ack frame from the target access point using the Fast Transition Resource Request Protocol, wherein the Authentication-Ack frame is configured to determine the first information, or recommend second information different from the first information;
receiving a Fast-Transition-Ack frame from the current access point using the Fast Transition Resource Request Protocol, wherein the Fast-Transition-Ack frame is configured to determine the first information or recommend second information different from the first information, and is generated based on information from the target access point; or
receiving a Reassociation-Response frame from the target access point using the Fast Basic Service Set Transition Protocol in a reassociation process, wherein the Reassociation-Response frame is configured to determine the first information, or recommend second information different from the first information.

8. The method according to any one of claims 2 to 5, wherein the station is a station multi-link device, the target access point is a target access point multi-link device, and the current access point is a current access point multi-link device; and transmitting the first frame to the target access point or the current access point using at least one of the Fast Basic Service Set Transition Protocol or the Fast Transition Resource Request Protocol, wherein the first frame carries the first information, comprises:
transmitting an Authentication-Confirm frame via an affiliated first station to a first access point affiliated with the target access point multi-link device using the Fast Transition Resource Request Protocol, wherein the Authentication-Confirm frame carries first information of a current link;
transmitting a Fast-Transition-Confirm frame via an affiliated first station to a second access point affiliated with the current access point multi-link device using the Fast Transition Resource Request Protocol, wherein the Fast-Transition-Confirm frame carries first information of a current link and a multi-link address of the target access point multi-link device; or
transmitting a Reassociation-Request frame via an affiliated first station to a first access point affiliated with the target access point multi-link device using the Fast Basic Service Set Transition Protocol in a reassociation process, wherein the Reassociation-Request frame carries first information of a current link.

9. The method according to claim 4 or 5, wherein the station is a station multi-link device, the target access point is a target access point multi-link device, and the current access point is a current access point multi-link device; and receiving the second frame from the target access point or the current access point using at least one of the Fast Basic Service Set Transition Protocol or the Fast Transition Resource Request Protocol comprises:
causing an affiliated first station to receive an Authentication-Ack frame from a first access point affiliated with the target access point multi-link device using the Fast Transition Resource Request Protocol, wherein the Authentication-Ack frame is configured to determine first information of a current link, or recommend second information different from the first information;
causing an affiliated first station to receive a Fast-Transition-Ack frame from a second access point affiliated with the current access point multi-link device using the Fast Transition Resource Request Protocol, wherein the Fast-Transition-Ack frame is configured to determine first information of a current link or recommend second information different from the first information, and is generated based on information from the target access point multi-link device; or
causing an affiliated first station to receive a Reassociation-Response frame from a first access point affiliated with the target access point multi-link device using the Fast Basic Service Set Transition Protocol, wherein the Reassociation-Response frame is configured to determine first information of a current link, or recommend second information different from the first information.

10. The method according to any one of claims 2 to 5, wherein the station is a station multi-link device, the target access point is a target access point multi-link device, and the current access point is a current access point multi-link device, wherein n access points affiliated with the target access point multi-link device support pre-negotiation for the first information, n being a positive integer; and transmitting the first frame to the target access point or the current access point using at least one of the Fast Basic Service Set Transition Protocol or the Fast Transition Resource Request Protocol, wherein the first frame carries the first information, comprises:
transmitting an Authentication-Confirm frame via an affiliated first station to a first access point affiliated with the target access point multi-link device using the Fast Transition Resource Request Protocol, wherein the Authentication-Confirm frame carries first information of at least one link;
transmitting a Fast-Transition-confirm frame via an affiliated first station to a second access point affiliated with the current access point multi-link device using the Fast Transition Resource Request Protocol, wherein the Fast-Transition-confirm frame carries first information of at least one link and a multi-link address of the target access point multi-link device; or
transmitting a Reassociation-Request frame via an affiliated first station to a first access point affiliated with the target access point multi-link device using the Fast Basic Service Set Transition Protocol in a reassociation process, wherein the Reassociation-Request frame carries first information of at least one link,
wherein the at least one link is a link corresponding to at least one affiliated access point in the n affiliated access points.

11. The method according to claim 4 or 5, wherein the station is a station multi-link device, the target access point is a target access point multi-link device, and the current access point is a current access point multi-link device, wherein n access points affiliated with the target access point multi-link device support pre-negotiation for the first information, n being a positive integer; and receiving the second frame from the target access point or the current access point using at least one of the Fast Basic Service Set Transition Protocol or the Fast Transition Resource Request Protocol comprises:
causing an affiliated first station to receive an Authentication-Ack frame via a first access point affiliated with the target access point multi-link device using the Fast Transition Resource Request Protocol, wherein the Authentication-Ack frame is configured to determine first information of at least one link, or recommend second information different from the first information;
causing an affiliated first station to receive a Fast-Transition-Ack frame via a second access point affiliated with the current access point multi-link device using the Fast Transition Resource Request Protocol, wherein the Fast-Transition-Ack frame is configured to determine first information of at least one link or recommend second information different from the first information, and is generated based on information from the target access point multi-link device; or
causing an affiliated first station to receive a Reassociation-Response frame via a first access point affiliated with the target access point multi-link device using the Fast Basic Service Set Transition Protocol, wherein the Reassociation-Response frame is configured to determine first information of at least one link, or recommend second information different from the first information,
wherein the at least one link is a link corresponding to at least one affiliated access point in the n affiliated access points.

12. The method according to any one of claims 2 to 11, wherein the first information is carried in an element corresponding to the first information in a Resource Information Container (RIC)-Request field.

13. The method according to claim 4, 5, 7, 9 or 11, wherein the second information is carried in an element corresponding to the second information in a Resource Information Container (RIC)-Response field.

14. The method according to any one of claims 1 to 11, wherein time information dependent on at least one of the TWT or the R-TWT is acquired based on a Timestamp field in at least one of a Beacon frame or a Probe Response frame of the target access point.

15. The method according to any one of claims 1 to 11, wherein the first information comprises the TWT, and the TWT is used to request to set up at least one TWT and/or join at least one TWT that has been set up by the target access point.

16. The method according to any one of claims 1 to 11, wherein the first information comprises the R-TWT, and the R-TWT is a broadcast TWT.

17. The method according to any one of claims 8 to 11, wherein a Traffic Information field in the R-TWT is configured based on a first traffic identifier-to-link mapping and a requirement of a latency-sensitive traffic, wherein the first traffic identifier-to-link mapping is advertised by an affiliated access point of the target access point multi-link device.

18. The method according to any one of claims 8 to 11, wherein a Traffic Information field in the R-TWT is configured based on a second traffic identifier-to-link mapping and a requirement of a latency-sensitive traffic, wherein the second traffic identifier-to-link mapping is to be negotiated by the station multi-link device with the target access point multi-link device.

19. The method according to claim 10 or 11, wherein the first information comprises: at least one TWT element, wherein each of the at least one TWT element indicates a first TWT or the R-TWT; and a link identifier bitmap, wherein the link identifier bitmap indicates a link of the first TWT or the R-TWT.

20. The method according to claim 19, wherein each of the at least one TWT element carries the link identifier bitmap, a first TWT element in the at least one TWT element carries the link identifier bitmap, a last TWT element in the at least one TWT element carries the link identifier bitmap, or a part of TWT elements in the at least one TWT element carry the link identifier bitmap.

21. The method according to claim 20, wherein in a case where the first TWT is a broadcast TWT and a first field outside a broadcast TWT parameter set takes a first value, each of the at least one TWT element carries the link identifier bitmap, the first TWT element in the at least one TWT element carries the link identifier bitmap, or the last TWT element in the at least one TWT element carries the link identifier bitmap, wherein the first field is a field indicating whether the link identifier bitmap is present.

22. The method according to claim 20, wherein in a case where the first TWT is a broadcast TWT and a first field in a TWT parameter set of the part of TWT elements takes a first value, the part of TWT elements carry the link identifier bitmap, wherein the first field is a field indicating whether the link identifier bitmap is present.

23. The method according to any one of claims 8 to 11 or 17 to 22, wherein a link identifier in the first information is configured based on a link identifier in the target access point multi-link device.

24. The method according to claim 23, wherein the link identifier in the target access point multi-link device is acquired based on at least one of a Beacon frame, or a Basic Multi-Link element or a Reduced Neighbor Report element in a Multi-Link Probe Response frame.

25. The method according to any one of claims 8 to 11, wherein the current link is indicated by at least one of: use of the current link by the current access point multi-link device for interaction in a case where the current access point multi-link device is interacted with the target access point multi-link device; or a link identifier bitmap in the first information, wherein the link identifier bitmap is used to indicate the current link.

26. A negotiation method for fast access point transition, performed by a target access point, the method comprising:
pre-negotiating first information with a station using at least one of Fast Basic Service Set Transition Protocol or Fast Transition Resource Request Protocol, wherein the first information comprises at least one of a target wake time (TWT), a restricted TWT (R-TWT), or a traffic identifier-to-link mapping.

27. The method according to claim 26, wherein pre-negotiating the first information with the station using at least one of the Fast Basic Service Set Transition Protocol or the Fast Transition Resource Request Protocol comprises:
receiving a first frame from the station or a current access point using at least one of the Fast Basic Service Set Transition Protocol or the Fast Transition Resource Request Protocol, wherein the first frame carries the first information.

28. The method according to claim 27, wherein the first frame comprises at least one of an Authentication-Confirm frame, a Fast-Transition-Confirm frame, or a Reassociation-Request frame.

29. The method according to claim 27, further comprising:
transmitting a second frame to the station or the current access point using at least one of the Fast Basic Service Set Transition Protocol or the Fast Transition Resource Request Protocol, wherein the second frame is configured to confirm the first information, or recommend second information different from the first information.

30. The method according to claim 29, wherein the second frame comprises at least one of an Authentication-Ack frame, a Fast-Transition-Ack frame, or a Reassociation-Response frame.

31. The method according to any one of claims 27 to 30, wherein receiving the first frame from the station or the current access point using at least one of the Fast Basic Service Set Transition Protocol or the Fast Transition Resource Request Protocol, wherein the first frame carries the first information, comprises:
receiving an Authentication-Confirm frame from the station using the Fast Transition Resource Request Protocol, wherein the Authentication-Confirm frame carries the first information;
receiving information carried in a Fast-Transition-Confirm frame forwarded by the current access point using the Fast Transition Resource Request Protocol, wherein the Fast-Transition-Confirm frame carries the first information and an address of the target access point; or
receiving a Reassociation-Request frame from the station using the Fast Basic Service Set Transition Protocol in a reassociation process, wherein the Reassociation-Request frame carries the first information.

32. The method according to claim 29 or 30, wherein transmitting the second frame to the station or the current access point using at least one of the Fast Basic Service Set Transition Protocol or the Fast Transition Resource Request Protocol comprises:
transmitting an Authentication-Ack frame to the station using the Fast Transition Resource Request Protocol, wherein the Authentication-Ack frame is configured to determine the first information, or recommend second information different from the first information;
transmitting information for generating a Fast-Transition-Ack frame to the current access point using the Fast Transition Resource Request Protocol, wherein the Fast-Transition-Ack frame is configured to determine the first information, or recommend second information different from the first information; or
transmitting a Reassociation-Response frame to the station using the Fast Basic Service Set Transition Protocol in a reassociation process, wherein the Reassociation-Response frame is configured to determine the first information, or recommend second information different from the first information.

33. The method according to any one of claims 27 to 30, wherein the station is a station multi-link device, the target access point is a target access point multi-link device, and the current access point is a current access point multi-link device; and receiving the first frame from the station or the current access point using at least one of the Fast Basic Service Set Transition Protocol or the Fast Transition Resource Request Protocol, wherein the first frame carries the first information, comprises:
causing an affiliated first access point to receive an Authentication-Confirm frame from a first station affiliated with the station multi-link device using the Fast Transition Resource Request Protocol, wherein the Authentication-Confirm frame carries first information of a current link;
causing an affiliated first access point to receive information carried in a Fast-Transition-Confirm frame forwarded by a second access point affiliated with the current access point multi-link device using the Fast Transition Resource Request Protocol, wherein the Fast-Transition-Confirm frame carries first information of a current link and a multi-link address of the target access point multi-link device; or
causing an affiliated first access point to receive a Reassociation-Request frame from a first station affiliated with the station multi-link device using the Fast Basic Service Set Transition Protocol in a reassociation process, wherein the Reassociation-Request frame carries first information of a current link.

34. The method according to claim 29 or 30, wherein the station is a station multi-link device, the target access point is a target access point multi-link device, and the current access point is a current access point multi-link device; and transmitting the second frame to the station or the current access point using at least one of the Fast Basic Service Set Transition Protocol or the Fast Transition Resource Request Protocol comprises:
transmitting an Authentication-Ack frame via an affiliated first access point to a first station affiliated with the station multi-link device using the Fast Transition Resource Request Protocol, wherein the Authentication-Ack frame is configured to determine first information of a current link, or recommend second information different from the first information;
transmitting information for generating a Fast-Transition-Ack frame via an affiliated first access point to a second access point affiliated with the current access point multi-link device using the Fast Transition Resource Request Protocol, wherein the Fast-Transition-Ack frame is configured to determine first information of a current link or recommend second information different from the first information; or
transmitting a Reassociation-Response frame via an affiliated first access point to a first station affiliated with the station multi-link device using the Fast Basic Service Set Transition Protocol, wherein the Reassociation-Response frame is configured to determine first information of a current link, or recommend second information different from the first information.

35. The method according to any one of claims 27 to 30, wherein the station is a station multi-link device, the target access point is a target access point multi-link device, and the current access point is a current access point multi-link device, wherein n access points affiliated with the target access point multi-link device support pre-negotiation for the first information, n being a positive integer; and receiving the first frame from the station or the current access point using at least one of the Fast Basic Service Set Transition Protocol or the Fast Transition Resource Request Protocol, wherein the first frame carries the first information, comprises:
causing an affiliated first access point to receive an Authentication-Confirm frame from a first station affiliated with the station multi-link device using the Fast Transition Resource Request Protocol, wherein the Authentication-Confirm frame carries first information of at least one link;
causing an affiliated first access point to receive information carried in a Fast-Transition-Confirm frame forwarded by a second access point affiliated with the current access point multi-link device using the Fast Transition Resource Request Protocol, wherein the Fast-Transition-Confirm frame carries first information of at least one link and a multi-link address of the target access point multi-link device; or
causing an affiliated first access point to receive a Reassociation-Request frame from a first station affiliated with the station multi-link device using the Fast Basic Service Set Transition Protocol in a reassociation process, wherein the Reassociation-Request frame carries first information of at least one link,
wherein the at least one link is a link corresponding to at least one affiliated access point in the n affiliated access points.

36. The method according to claim 29 or 30, wherein the station is a station multi-link device, the target access point is a target access point multi-link device, and the current access point is a current access point multi-link device, wherein n access points affiliated with the target access point multi-link device support pre-negotiation for the first information, n being a positive integer; and transmitting the second frame to the station or the current access point using at least one of the Fast Basic Service Set Transition Protocol or the Fast Transition Resource Request Protocol comprises:
transmitting an Authentication-Ack frame via an affiliated first access point to a first station affiliated with the station multi-link device using the Fast Transition Resource Request Protocol, wherein the Authentication-Ack frame is configured to determine first information of at least one link, or recommend second information different from the first information;
transmitting information for generating a Fast-Transition-Ack frame via an affiliated first access point to a second access point affiliated with the current access point multi-link device using the Fast Transition Resource Request Protocol, wherein the Fast-Transition-Ack frame is configured to determine first information of at least one link or recommend second information different from the first information; or
transmitting a Reassociation-Response frame via an affiliated first access point to a first station affiliated with the station multi-link device using the Fast Basic Service Set Transition Protocol, wherein the Reassociation-Response frame is configured to determine first information of at least one link, or recommend second information different from the first information,
wherein the at least one link is a link corresponding to at least one affiliated access point in the n affiliated access points.

37. The method according to any one of claims 27 to 36, wherein the first information is carried in an element corresponding to the first information in a Resource Information Container (RIC)-Request field.

38. The method according to claim 29, 30, 32, 34 or 36, wherein the second information is carried in an element corresponding to the second information in a Resource Information Container (RIC)-Response field.

39. The method according to any one of claims 26 to 36, wherein time information dependent on at least one of the TWT or the R-TWT is acquired based on a Timestamp field in at least one of a Beacon frame or a Probe Response frame of the target access point.

40. The method according to any one of claims 26 to 36, wherein the first information comprises the TWT, and the TWT is used to request to set up at least one TWT and/or join at least one TWT that has been set up by the target access point.

41. The method according to any one of claims 26 to 36, wherein the first information comprises the R-TWT, and the R-TWT is a broadcast TWT.

42. The method according to any one of claims 33 to 36, wherein a Traffic Information field in the R-TWT is configured based on a first traffic identifier-to-link mapping and a requirement of a latency-sensitive traffic, wherein the first traffic identifier-to-link mapping is advertised by an affiliated access point of the target access point multi-link device.

43. The method according to any one of claims 33 to 36, wherein a Traffic Information field in the R-TWT is configured based on a second traffic identifier-to-link mapping and a requirement of a latency-sensitive traffic, wherein the second traffic identifier-to-link mapping is to be negotiated by the station multi-link device with the target access point multi-link device.

44. The method according to claim 35 or 36, wherein the first information comprises: at least one TWT element, wherein each of the at least one TWT element indicates a first TWT or the R-TWT; and a link identifier bitmap, wherein the link identifier bitmap indicates a link of the first TWT or the R-TWT.

45. The method according to claim 44, wherein each of the at least one TWT element carries the link identifier bitmap, a first TWT element in the at least one TWT element carries the link identifier bitmap, a last TWT element in the at least one TWT element carries the link identifier bitmap, or a part of TWT elements in the at least one TWT element carry the link identifier bitmap.

46. The method according to claim 45, wherein in a case where the first TWT is a broadcast TWT and a first field outside a broadcast TWT parameter set takes a first value, each of the at least one TWT element carries the link identifier bitmap, the first TWT element in the at least one TWT element carries the link identifier bitmap, or the last TWT element in the at least one TWT element carries the link identifier bitmap, wherein the first field is a field indicating whether the link identifier bitmap is present.

47. The method according to claim 45, wherein in a case where the first TWT is a broadcast TWT and a first field in a TWT parameter set of the part of TWT elements takes a first value, the part of TWT elements carry the link identifier bitmap, wherein the first field is a field indicating whether the link identifier bitmap is present.

48. The method according to any one of claims 33 to 36 or 42 to 47, wherein a link identifier in the first information is configured based on a link identifier in the target access point multi-link device.

49. The method according to claim 48, wherein the link identifier in the target access point multi-link device is acquired based on at least one of a Beacon frame, or a Basic Multi-Link element or a Reduced Neighbor Report element in a Multi-Link Probe Response frame.

50. The method according to any one of claims 33 to 36, wherein the current link is indicated by at least one of: use of the current link by the current access point multi-link device for interaction in a case where the current access point multi-link device is interacted with the target access point multi-link device; or a link identifier bitmap in the first information, wherein the link identifier bitmap is used to indicate the current link.

51. A negotiation method for fast access point transition, performed by a current access point, the method comprising:
forwarding information of pre-negotiation for first information between a station and a target access point using at least one of Fast Basic Service Set Transition Protocol or Fast Transition Resource Request Protocol, wherein the first information comprises at least one of a target wake time (TWT), a restricted TWT (R-TWT), or a traffic identifier-to-link mapping.

52. The method according to claim 51, wherein forwarding the information of pre-negotiation for the first information between the station and the target access point using at least one of the Fast Basic Service Set Transition Protocol or the Fast Transition Resource Request Protocol comprises:
receiving a first frame from the station using at least one of the Fast Basic Service Set Transition Protocol or the Fast Transition Resource Request Protocol, and forwarding information carried in the first frame to the target access point, wherein the first frame carries the first information.

53. The method according to claim 52, wherein the first frame comprises at least one of an Authentication-Confirm frame, a Fast-Transition-Confirm frame, or a Reassociation-Request frame.

54. The method according to claim 52, further comprising:
receiving information for generating a second frame from the target access point using at least one of the Fast Basic Service Set Transition Protocol or the Fast Transition Resource Request Protocol, and transmitting the second frame to the station, wherein the second frame is configured to confirm the first information, or recommend second information different from the first information.

55. The method according to claim 54, wherein the second frame comprises at least one of an Authentication-Ack frame, a Fast-Transition-Ack frame, or a Reassociation-Response frame.

56. The method according to any one of claims 52 to 55, wherein receiving the first frame from the station using at least one of the Fast Basic Service Set Transition Protocol or the Fast Transition Resource Request Protocol, and forwarding the information carried in the first frame to the target access point, wherein the first frame carries the first information, comprise:
receiving a Fast-Transition-Confirm frame from the station using the Fast Transition Resource Request Protocol, and forwarding information carried in the Fast-Transition-Confirm frame to the target access point, wherein the Fast-Transition-Confirm frame carries the first information and an address of the target access point.

57. The method according to claim 54 or 55, wherein receiving the information for generating the second frame from the target access point using at least one of the Fast Basic Service Set Transition Protocol or the Fast Transition Resource Request Protocol, and transmitting the second frame to the station, wherein the second frame is configured to confirm the first information, or recommend second information different from the first information, comprise:
receiving information for generating a Fast-Transition-Ack frame from the target access point using the Fast Transition Resource Request Protocol, and forwarding the Fast-Transition-Ack frame to the station, wherein the Fast-Transition-Ack frame is configured to determine the first information or recommend second information different from the first information, and is generated based on the information from the target access point.

58. The method according to any one of claims 52 to 55, wherein the station is a station multi-link device, the target access point is a target access point multi-link device, and the current access point is a current access point multi-link device; and receiving the first frame from the station using at least one of the Fast Basic Service Set Transition Protocol or the Fast Transition Resource Request Protocol, and forwarding the information carried in the first frame to the target access point, wherein the first frame carries the first information, comprise:
causing an affiliated second access point to receive a Fast-Transition-Confirm frame from a first station affiliated with the station multi-link device using the Fast Transition Resource Request Protocol, and forward information carried in the Fast-Transition-Confirm frame to a first access point affiliated with the target access point multi-link device, wherein the Fast-Transition-Confirm frame carries first information of a current link and a multi-link address of the target access point multi-link device.

59. The method according to claim 54 or 55, wherein the station is a station multi-link device, the target access point is a target access point multi-link device, and the current access point is a current access point multi-link device; and receiving the information for generating the second frame from the target access point using at least one of the Fast Basic Service Set Transition Protocol or the Fast Transition Resource Request Protocol, and transmitting the second frame to the station, wherein the second frame is configured to confirm the first information, or recommend second information different from the first information, comprise:
causing an affiliated second access point to receive information for generating a Fast-Transition-Ack frame from a first access point affiliated with the target access point multi-link device using the Fast Transition Resource Request Protocol, and forward the Fast-Transition-Ack frame to a first station affiliated with the station multi-link device, wherein the Fast-Transition-Ack frame is configured to determine first information of a current link or recommend second information different from the first information, and is generated based on the information from the target access point multi-link device.

60. The method according to any one of claims 52 to 55, wherein the station is a station multi-link device, the target access point is a target access point multi-link device, and the current access point is a current access point multi-link device, wherein n access points affiliated with the target access point multi-link device support pre-negotiation for the first information, n being a positive integer; and receiving the first frame from the station using at least one of the Fast Basic Service Set Transition Protocol or the Fast Transition Resource Request Protocol, and forwarding the information carried in the first frame to the target access point, wherein the first frame carries the first information, comprise:
causing an affiliated second access point to receive a Fast-Transition-Confirm frame from a first station affiliated with the station multi-link device using the Fast Transition Resource Request Protocol, and forward information carried in the Fast-Transition-Confirm frame to a first access point affiliated with the target access point multi-link device, wherein the Fast-Transition-Confirm frame carries first information of at least one link and a multi-link address of the target access point multi-link device, wherein the at least one link is a link corresponding to at least one affiliated access point in the n affiliated access points.

61. The method according to claim 54 or 55, wherein the station is a station multi-link device, the target access point is a target access point multi-link device, and the current access point is a current access point multi-link device, wherein n access points affiliated with the target access point multi-link device support pre-negotiation for the first information, n being a positive integer; and receiving the information for generating the second frame from the target access point using at least one of the Fast Basic Service Set Transition Protocol or the Fast Transition Resource Request Protocol, and transmitting the second frame to the station, wherein the second frame is configured to confirm the first information, or recommend second information different from the first information, comprise:
causing an affiliated second access point to receive information for generating a Fast-Transition-Ack frame from a first access point affiliated with the target access point multi-link device using the Fast Transition Resource Request Protocol, and forward the Fast-Transition-Ack frame to a first station affiliated with the station multi-link device, wherein the Fast-Transition-Ack frame is configured to determine first information of at least one link or recommend second information different from the first information, and is generated based on information from the target access point multi-link device, wherein the at least one link is a link corresponding to at least one affiliated access point in the n affiliated access points.

62. The method according to any one of claims 52 to 61, wherein the first information is carried in an element corresponding to the first information in a Resource Information Container (RIC)-Request field.

63. The method according to claim 54, 55, 57, 59 or 61, wherein the second information is carried in an element corresponding to the second information in a Resource Information Container (RIC)-Response field.

64. The method according to any one of claims 51 to 61, wherein time information dependent on at least one of the TWT or the R-TWT is acquired a Timestamp field in at least one of a Beacon frame or a Probe Response frame of the target access point.

65. The method according to any one of claims 51 to 61, wherein the first information comprises the TWT, and the TWT is used to request to set up at least one TWT and/or join at least one TWT that has been set up by the target access point.

66. The method according to any one of claims 51 to 616, wherein the first information comprises the R-TWT, and the R-TWT is a broadcast TWT.

67. The method according to any one of claims 58 to 61, wherein a Traffic Information field in the R-TWT is configured based on a first traffic identifier-to-link mapping and a requirement of a latency-sensitive traffic, wherein the first traffic identifier-to-link mapping is advertised by an affiliated access point of the target access point multi-link device.

68. The method according to any one of claims 58 to 61, wherein a Traffic Information field in the R-TWT is configured based on a second traffic identifier-to-link mapping and a requirement of a latency-sensitive traffic, wherein the second traffic identifier-to-link mapping is to be negotiated by the target access point multi-link device with the station multi-link device.

69. The method according to claim 60 or 61, wherein the first information comprises: at least one TWT element, wherein each of the at least one TWT element indicates a first TWT or the R-TWT; and a link identifier bitmap, wherein the link identifier bitmap indicates a link of the first TWT or the R-TWT.

70. The method according to claim 69, wherein each of the at least one TWT element carries the link identifier bitmap, a first TWT element in the at least one TWT element carries the link identifier bitmap, a last TWT element in the at least one TWT element carries the link identifier bitmap, or a part of TWT elements in the at least one TWT element carry the link identifier bitmap.

71. The method according to claim 70, wherein in a case where the first TWT is a broadcast TWT and a first field outside a broadcast TWT parameter set takes a first value, each of the at least one TWT element carries the link identifier bitmap, the first TWT element in the at least one TWT element carries the link identifier bitmap, or the last TWT element in the at least one TWT element carries the link identifier bitmap, wherein the first field is a field indicating whether the link identifier bitmap is present.

72. The method according to claim 70, wherein in a case where the first TWT is a broadcast TWT and a first field in a TWT parameter set of the part of TWT elements takes a first value, the part of TWT elements carry the link identifier bitmap, wherein the first field is a field indicating whether the link identifier bitmap is present.

73. The method according to any one of claims 58 to 61 or 67 to 72, wherein a link identifier in the first information is configured based on a link identifier in the target access point multi-link device.

74. The method according to claim 73, wherein the link identifier in the target access point multi-link device is acquired based on at least one of a Beacon frame, or a Basic Multi-Link element or a Reduced Neighbor Report element in a Multi-Link Probe Response frame.

75. The method according to any one of claims 58 to 61, wherein the current link is indicated by at least one of: use of the current link by the current access point multi-link device for interaction in a case where the current access point multi-link device is interacted with the target access point multi-link device; or a link identifier bitmap in the first information, wherein the link identifier bitmap is used to indicate the current link.

76. A negotiation apparatus for fast access point transition, comprising:
a first transmitting module, configured to pre-negotiate first information with a target access point using at least one of Fast Basic Service Set Transition Protocol or Fast Transition Resource Request Protocol, wherein the first information comprises at least one of a target wake time (TWT), a restricted TWT (R-TWT), or a traffic identifier-to-link mapping.

77. A negotiation apparatus for fast access point transition, comprising:
a second transmitting module, configured to pre-negotiate first information with a station using at least one of Fast Basic Service Set Transition Protocol or Fast Transition Resource Request Protocol, wherein the first information comprises at least one of a target wake time (TWT), a restricted TWT (R-TWT), or a traffic identifier-to-link mapping.

78. A negotiation apparatus for fast access point transition, comprising:
a third transmitting module, configured to forward information of pre-negotiation for first information between a station and a target access point using at least one of Fast Basic Service Set Transition Protocol or Fast Transition Resource Request Protocol, wherein the first information comprises at least one of a target wake time (TWT), a restricted TWT (R-TWT), or a traffic identifier-to-link mapping.

79. A station device, comprising: a processor, a transceiver connected to the processor, and a memory storing one or more executable instructions; wherein the processor is configured to load and execute the one or more executable instructions to cause the station device to perform the negotiation method for fast access point transition as defined in any one of claims 1 to 25.

80. An access point device, comprising: a processor, a transceiver connected to the processor, and a memory storing one or more executable instructions; wherein the processor is configured to load and execute the one or more executable instructions to cause the access point device to perform the negotiation method for fast access point transition as defined in any one of claims 26 to 75.

81. A computer-readable storage medium, storing one or more computer programs, wherein the one or more runnable programs, when loaded and run by a processor, cause the processor to perform the negotiation method for fast access point transition as defined in any one of claims 1 to 75.

82. A computer program product, comprising: one or more computer instructions, wherein the one or more computer instructions are stored in a computer-readable storage medium, and when read and executed by a processor, cause the processor to perform the negotiation method for fast access point transition as defined in any one of claims 1 to 75.
